# EUROPÄISCHE PATENTSCHRIFT

(11) **EP 3 855 989 B1**
(45) Veröffentlichungstag und Bekanntmachung des Hinweises auf die Patenterteilung: **24.01.2024**
(21) Anmeldenummer: 19773832.1
(22) Anmeldetag: 25.09.2019
(51) Int. Cl.: A47J 36/24, A45C 11/20, B65D 81/34

(54) **PORTABLE LUNCHBOX**
PORTABLE LUNCHBOX
BOÎTE À REPAS PORTABLE

(30) Priorität: 28.09.2018 EP 18197440
(43) Veröffentlichungstag der Anmeldung: 04.08.2021
(73) Patentinhaber: Nexenic AG, 8406 Winterthur (CH)
(72) Erfinder: RIBEIRO RUIZ, Claudio, 7205 Zizers (CH); MUHL, Reto, 8236 Büttenhardt (CH)
(74) Vertreter: Clerc, Natalia
(86) Internationale Anmeldenummer: PCT/EP2019/075885
(87) Internationale Veröffentlichungsnummer: WO 2020/064848

(56) Entgegenhaltungen:
- WO-A1-03/101268
- WO-A2-2010/082762
- CH-A2- 712 870
- CN-A- 105 877 474
- CN-A- 107 692 815
- US-A1- 2014 261 381
- US-A1- 2016 045 054
- US-B1- 6 947 664

## Beschreibung

### TECHNISCHES GEBIET

Die vorliegende Erfindung betrifft das Gebiet der portablen Lunchboxen zum Aufbewahren, Transportieren und Zubereiten von Nahrungsmitteln.

### STAND DER TECHNIK

Im heutigen Geschäftsleben, aber auch während der Ausbildungszeit, ist es immer schwieriger, sich während des Tages gesund zu ernähren. Restaurants sind oft überfüllt und teuer, Kantinen bieten selten schmackhaftes Essen an und Imbissstände bieten meistens ungesundes Essen an. Es besteht somit das Bedürfnis, von zu Hause mitgebrachtes Essen einfach zubereiten zu können. Dieses Bedürfnis wird umso mehr verstärkt, wenn der Arbeitgeber keine Küche oder maximal einen Mikrowellenherd anbietet.

Im Stand der Technik sind deshalb Lunchboxen bekannt, welche eine Erwärmung mitgebrachter Speisen vor Ort ermöglichen.

WO 2015/177726 A1 beschreibt eine Lunchbox umfassend eine Oberschale und eine Unterschale, welche miteinander klappbar und gegeneinander schliessbar verbunden sind. In der Unterschale ist eine Schale mit einem zugehörigen Heizelement angeordnet, durch welches in der Schale befindliche Nahrungsmittel erwärmt werden können. Im geschlossenen Zustand der Oberschale ist eine Dichtung zwischen Oberschale und Schale angeordnet.

CH 712870 A2 beschreibt ein Behältnis zum Transportieren und Erwärmen von Nahrungsmitteln mit einem Hauptteil und einem darauf dichtend aufsetzbaren Deckel. In dem Behältnis befindet sich eine Aufnahmeschale mit eigenem Deckel, welche von in dem Hauptteil angeordneten Heizelementen beheizt werden kann.

US 2016/0045054 A1 beschreibt einen Kochcontainer mit einem äusseren Körper mit einer Heizkavität, in welche Wasser und ein Heizelement eingeführt werden. Oberhalb der Heizkavität wird ein innerer Körper in dem äusseren Körper angeordnet. Das Wasser in der Heizkavität wird erwärmt, wodurch der darüber angeordnete innere Körper und darin befindliche Nahrungsmittel erwärmt werden. Dabei sind die Heizkavität und der Innenraum des inneren Körpers nicht miteinander verbunden.

Die meisten Vorrichtungen gemäss dem Stand der Technik erlauben jedoch lediglich ein Erwärmen von Speisen. Zudem sind Steamer bekannt, welche jedoch relativ kompliziert aufgebaut, entsprechend schwer und teuer sind.

### DARSTELLUNG DER ERFINDUNG

Es ist deshalb eine Aufgabe der vorliegenden Erfindung, eine Lunchbox zu schaffen, welche eine wählbare Zubereitung von Speisen ermöglicht.

Die Erfindung löst diese Aufgabe gemäss den Merkmalen des Patentanspruchs 1.

Die erfindungsgemässe portable Lunchbox zum Aufbewahren, Transportieren und Zubereiten von Nahrungsmitteln, weist eine Nahrungsmittel-Kavität zur Aufnahme von Nahrungsmitteln, eine Heiz-Kavität zur Aufnahme von Wasser, ein Heizelement zur Erwärmung von Wasser in der Heiz-Kavität und eine Schaltvorrichtung auf, welche von einem ersten Zustand in einen zweiten Zustand geschaltet werden kann. Die Lunchbox ist dazu eingerichtet, in dem ersten Zustand der Schaltvorrichtung in der Nahrungsmittel-Kavität angeordnete Nahrungsmittel zu erwärmen, und in dem zweiten Zustand der Schaltvorrichtung in der Nahrungsmittel-Kavität angeordnete Nahrungsmittel zu steamen, wobei die Schaltvorrichtung im ersten Zustand eine Gas-Verbindung zwischen der Heiz-Kavität und der Nahrungsmittel-Kavität verschließt, und in einem zweiten Zustand eine Gas-Verbindung zwischen der Heiz-Kavität und der Nahrungsmittel-Kavität öffnet.

Der erste Zustand der Schaltvorrichtung dient in bevorzugten Ausführungsformen auch dazu, die Lunchbox und insbesondere den Nahrungsmittelbehälter für den Transport genügend abzudichten.

Unter dem Begriff "Zubereitung" wird in diesem Text grundsätzlich das Erwärmen einer bereits fertigen Speise verstanden. Eine Speise lässt sich grundsätzlich durch Zuführung von Wärme erwärmen, sei es mittels reiner Wärmeübertragung und/oder mittels Zuführung von Dampf, beispielsweise Wasserdampf. Im erweiterten Sinne wird hier der Begriff "Zubereitung" auch als Kochen, auch Garen, von Nahrungsmitteln verstanden, beispielsweise das Weichkochen von Kartoffeln oder Gemüse. Einige der erfindungsgemässen Ausführungsformen ermöglichen lediglich ein Erwärmen der Speisen, andere Ausführungsformen ermöglichen zusätzlich ein Kochen bzw. Garen von Nahrungsmitteln.

Steamen, auch Dämpfen genannt, ist nicht nur aufgrund der gesundheitlichen Vorteile eine immer populärere Zubereitungsweise. Mittels eines Steamers lassen sich Speisen aufwärmen oder, bei längerer Energiezufuhr, auch Garen. Diese Art der Zubereitung wird üblicherweise Dampfgaren genannt. Der Vorteil einer Erwärmung mit einem Steamer liegt insbesondere darin, dass die Speisen nicht austrocken.

Dank der erfindungsgemässen Lunchbox kann der Benutzer je nach Inhalt der Lunchbox die Zubereitungsart wählen. Führt er an einem Tag eine bereits fertig zubereitete Speise mit, so kann er diese einfach erwärmen. Führt er an einem anderen Tag Nahrungsmittel mit, welche noch gekocht werden müssen, kann er dies ebenfalls mit derselben Lunchbox ausführen. Des Weiteren kann er dasselbe Nahrungsmittel zuerst Vorwärmen und anschliessend steamen oder umgekehrt. Hierzu muss er jeweils lediglich die Schaltvorrichtung betätigen. Es lassen sich auch käuflich erworbene Behälter mit vorbereiteten Speisen in der erfindungsgemässen Lunchbox verwenden.

Der Benutzer kann somit dieselbe Lunchbox verwenden, um sein Essen zu transportieren, aufzubewahren und für den Verzehr zuzubereiten. Vorzugsweise ist eine Dichtung vorhanden, welche in jeder dieser Situationen nach aussen hin dichtet, so dass keine Flüssigkeit und keine Gerüche nach draussen dringen. Dies ist besonders dann vorteilhaft, wenn die Lunchbox direkt am Arbeitsplatz, z.B. in einem Grossraumbüro, aufbewahrt und aktiviert wird.

Vorzugsweise erfolgt die Erwärmung und gegebenenfalls auch das Garen mittels Wasser, welches in eine entsprechende Kavität eingefüllt wird. Dies kann bereits vor dem Transport oder unmittelbar vor der Zubereitung der Speisen erfolgen.

Die Lunchbox weist eine Fluid-Verbindung zwischen der Heiz-Kavität und der Nahrungsmittel-Kavität auf, welche dazu eingerichtet ist durch die Schaltvorrichtung geöffnet bzw. geschlossen zu werden. Im Folgenden wird die Fluid-Verbindung Gas-Verbindung genannt. Sie umfasst Verbindungen, welche mindestens Dampf durchlässt.

Die Lunchbox ist vorzugsweise so ausgebildet, dass die Schaltvorrichtung in dem ersten Zustand die Gas-Verbindung verschliesst, so dass insbesondere kein Wasserdampf von der Heiz-Kavität in die Nahrungsmittel-Kavität gelangen kann. Wenn also nun in der Heiz-Kavität befindliches Wasser erwärmt wird, kann nur Wärme an die Nahrungsmittel-Kavität ausgetauscht werden, so dass in der Nahrungsmittel-Kavität angeordnete Nahrungsmittel nur erwärmt werden. In bevorzugten Ausführungsformen entspricht dieser Zustand auch dem Zustand, in welchem die Lunchbox mit den Speisen transportiert und gelagert werden kann, selbst wenn das Wasser zum Erwärmen der Speisen schon in die Lunchbox eingefüllt ist; d.h. die Lunchbox betriebsbereit ist. Vorzugsweise ist in diesem Zustand ein dichter Verschluss nach aussen vorhanden, welcher verhindert, dass Inhalte und Gerüche nach aussen dringen können.

Die Lunchbox ist vorzugsweise so ausgebildet, dass die Schaltvorrichtung in dem zweiten Zustand die Gas-Verbindung öffnet, so dass insbesondere Wasserdampf von der Heiz-Kavität in die Nahrungsmittel-Kavität gelangen kann. Wenn also nun in der Heiz-Kavität befindliches Wasser erwärmt wird und so Wasserdampf entsteht, kann dieser in die Nahrungsmittel-Kavität gelangen, so dass das in der Nahrungsmittel-Kavität angeordnete Nahrungsmittel gesteamt wird.

Das Heizelement ist vorzugsweise an der Heiz-Kavität angeordnet. Der Boden der Heiz-Kavität ist in bevorzugten Ausführungsbeispielen so ausgebildet, dass, zumindest in einer bestimmungsgemässen Gebrauchs-Position der Lunchbox, in der Heiz-Kavität befindliches Wasser immer zu dem Heizelement fliesst. Die Heiz-Kavität weist vorzugsweise einen schrägen Boden auf. Ist das Heizelement mittig in einem Boden der Heiz-Kavität angeordnet, wird eine möglichst gleichmässige Erwärmung der Nahrungsmittel erzielt.

Vorzugweise ist es zur Heizkavität hin plattenförmig ausgebildet.

In bevorzugten Ausführungsformen ist das Heizelement elektrisch betreibbar und die Lunchbox weist einen Akkumulator auf, welcher das Heizelement mit Strom versorgt. Vorzugweise ist ein Stromanschluss vorgesehen, durch welchen der Akkumulator geladen werden kann. Der Stromanschluss ist vorzugsweise mit gebräuchlichen Ladegeräten (z.B. USB-C, Lightning) kompatibel. In anderen Ausführungsformen ist alternativ oder zusätzlich eine Netzspeisung vorgesehen. Diese Netzspeisung ist insbesondere dann von Vorteil, wenn die Lunchbox nicht nur zum Erwärmen von Speisen verwendet werden soll, sondern auch zum Garen von Nahrungsmitteln.

Vorzugsweise weist die Lunchbox einen Deckel auf, welcher vollständig von einem Unterteil, hier Boden genannt, entfernt werden kann. Dadurch lässt sich Zugang zur Nahrungsmittel-Kavität schaffen. Vorzugsweise gelangt auch das Wasser über dieselbe Öffnung in die Heizkavität. In anderen Ausführungsformen ist hierfür eine separate Öffnung vorhanden.

Damit keine Gerüche nach aussen dringen und die Lunchbox transportierbar ist, ist vorzugsweise mindestens eine Dichtung vorhanden. Zudem ist eine Einrichtung vorhanden, welche die Nahrungsmittelkavität mit der Heizkavität verbindet oder verschliesst, um ein Steamen zu ermöglichen bzw. zu unterbinden. Vorzugsweise weist diese Einrichtung ebenfalls eine Dichtung auf. Diese zwei Dichtungen erhöhen die Sicherheit während des Transports und der Lagerung der gefüllten und betriebsbereiten Lunchbox.

In bevorzugten Ausführungsformen weist die Lunchbox deshalb eine erste Dichtung auf, wobei in dem ersten Zustand der Schaltvorrichtung die erste Dichtung die Nahrungsmittel-Kavität gasdicht gegen die Heiz-Kavität abdichtet, und in dem zweiten Zustand der Schaltvorrichtung die Schaltvorrichtung die erste Dichtung, zumindest teilweise, aufhebt, so dass die Nahrungsmittel-Kavität und die Heiz-Kavität miteinander gasverbunden sind.

In bevorzugten Ausführungsformen weist die Lunchbox eine zweite Dichtung auf, welche im geschlossenen Zustand der Lunchbox die Nahrungsmittel-Kavität nach aussen hin gasdicht abdichtet. Dieselbe Dichtung ist vorzugsweise so eingerichtet, dass sie im ersten und im zweiten Zustand der Schaltvorrichtung die Heiz-Kavität und vorzugsweise auch die Nahrungsmittel-Kavität nach aussen hin gasdicht und somit auch flüssigkeitsdicht abdichtet.

Vorzugsweise dichten im geschlossenen Zustand der Lunchbox beide Dichtungen die Nahrungsmittel-Kavität zur Aussenseite der Lunchbox aussen hin ab. Dadurch ist die Nahrungsmittel-Kavität mindestens beim Transport doppelt gegen Auslaufen geschützt.

Je nach Ausführungsform sind die erste Dichtung und die zweite Dichtung zwei voneinander getrennte Dichtungen. Sie sind vorzugsweise umlaufend ausgebildet. Vorzugsweise sind sie aus Silikon gefertigt.

In einer bevorzugten Ausführungsform sind diese zwei Dichtungen jedoch gemeinsam einstückig ausgebildet. Vorzugsweise bilden sie ein in sich geschlossenes Teil mit einem geschlossenen Umfang und einer Durchgangsöffnung in der Mitte. Dieses Dichtungsteil lässt sich beispielsweise auf einfache Art und Weise aus Silikon herstellen, die erste Dichtung bildet dabei vorzugsweise einen inneren Teil des Dichtungsteils und die zweite Dichtung einen äusseren Teil des Dichtungsteils.

In bevorzugten Ausführungsformen besteht die Lunchbox, abgesehen von der Elektronik und den Bedienungs- und Anzeigeelementen, im Wesentlichen aus dem Deckel, dem Boden und dem dazwischen angeordneten Behälter. Vorzugsweise ist der äussere Umfang durch den Deckel und den Boden definiert.

Vorzugsweise verfügt die Lunchbox über ein Heizelement, welches elektrisch betrieben ist. In bevorzugten Ausführungsformen ist im Boden eine Elektronik-Kavität vorhanden, in welcher elektronische Teile der Lunchbox, beispielsweise das Heizelement, angeordnet sind. Weitere Elemente in der Elektronik-Kavität sind beispielsweise ein Akkumulator, eine Platine, Kabel, mindestens einen Taster, eine akustische Signalausgabeeinheit, mindestens einen Drucksensor, mindestens einen Temperatursensor, mindestens eine Steuerungseinheit und mindestens im Falle eines Netzbetriebs einen Transformator. Ein Stromanschluss und/oder optische Signalausgabeeinheiten (z.B. LEDs) sind vorzugsweise in einer Wand der Elektronik-Kavität angeordnet. Der Boden ist hierfür vorzugsweise zwei- oder mehrteilig ausgebildet.

In bevorzugten Ausführungsformen ist der Deckel mittels mindestens eines Befestigungselements am Boden befestigt. Vorzugsweise sind mehrere Befestigungselemente vorhanden. Sie können unterschiedlich ausgebildet sein. Vorzugsweise sind sie Schnappelemente, welche sich in den Boden und/oder in den Deckel einklicken lassen. Die Schnappelemente sind vorzugsweise als Laschen ausgebildet, welche vorzugsweise am Deckel angeordnet sind. Beispielsweise sind sie schwenkbar angeordnet.

Die Schaltelemente können unterschiedlich ausgebildet sein. Sie können durch den Deckel selber, durch Verschiebelemente für den Deckel oder durch andere Mittel gebildet sein.

In einer bevorzugten Ausführungsform ist mindestens ein Teil dieser Befestigungselemente als Schaltelemente der genannten Schaltvorrichtung ausgebildet. Die, oder zumindest ein Teil der, Befestigungselemente können also eine doppelte Funktion erfüllen: einerseits ermöglichen sie das Öffnen und dichte Verschliessen der Lunchbox, andererseits ermöglichen sie, von einer Erwärm-Position in eine Steaming-Position zu wechseln. Dies ist eine einfache Konstruktion, welche eine einfache Bedienung und eine kostengünstige Herstellung erlaubt.

Beispielsweise lässt sich ein Teil der Befestigungselemente in eine geöffnete Position bringen, während ein anderer Teil in der geschlossenen Position verbleibt. Die geöffneten Elemente ermöglichen die Gas-Verbindung zwischen Heiz-Kavität und Nahrungsmittel-Kavität, die geschlossenen Elemente gewährleisten, dass die Lunchbox nach wie vor nach aussen gasdicht geschlossen ist.

In bevorzugten Ausführungsformen ist im geschlossen Zustand der Lunchbox die zweite Dichtung zwischen dem Deckel und dem Boden angeordnet, beispielsweise eingeklemmt, und/oder der Behälter ist zwischen Deckel und Boden angeordnet und eingeklemmt.

In bevorzugten Ausführungsformen weist die Lunchbox mindestens einen Drucksensor auf, welcher dazu eingerichtet ist, einen Druck zu erfassen. Vorzugsweise ist der Drucksensor dazu eingerichtet, einen die Lunchbox umgebenden Druck zu erfassen. Der Drucksensor ist beispielsweise in einer von der Nahrungsmittel-Kavität und von der Heiz-Kavität getrennten Kavität angeordnet, welche in Druckverbindung, z.B. Gasverbindung, mit der Umgebung der Lunchbox steht. Diese Kavität ist vorzugsweise die oben erwähnte Elektronik-Kavität. Der Drucksensor ist beispielsweise auf einer gemeinsamen Platine mit anderen elektronischen Bauteilen angeordnet. Alternativ ist der Drucksensor an einer Aussenseite der Lunchbox angeordnet.

Da ein zur Erfassung des äusseren Drucks eingerichteter Drucksensor in der Regel nicht in der Nahrungsmittel-Kavität oder Heiz-Kavität angeordnet ist, muss der Drucksensor nicht notwendigerweise speziell feuchtigkeitsresistent ausgebildet sein, wodurch Kosten gespart werden können. Zudem wird der Drucksensor nicht durch Kontakt mit den Nahrungsmitteln verschmutzt.

In bevorzugten Ausführungsformen weist die Lunchbox alternativ oder zusätzlich mindestens einen Temperatursensor auf, welcher dazu eingerichtet ist, eine Temperatur zu erfassen. Der Tempertatursensor ist vorzugsweise dazu eingerichtet, eine Temperatur innerhalb der Heiz-Kavität zu erfassen. Vorzugsweise ist der Temperatursensor in der Heiz-Kavität angeordnet. In bevorzugten Ausführungsformen ist der Temperatursensor im Wasser angeordnet.

In bevorzugten Ausführungsformen weist die Lunchbox eine Steuerungsvorrichtung auf, welche dazu eingerichtet ist, eine Heizleistung des Heizelementes zu steuern. Beispielsweise kann die Steuerungsvorrichtung dazu eingerichtet sein, das Heizelement nach einer definierten Heizdauer abzuschalten, um so z.B. zu verhindern, dass sich der Akkumulator zu tief entlädt.

In bevorzugten Ausführungsformen ist die Steuerungsvorrichtung dazu eingerichtet, die Heizleistung des Heizelementes zu steuern und in Abhängigkeit der von dem Drucksensor und dem Temperatursensor erfassten Daten zu steuern. Insbesondere kann die Heizleistung in Abhängigkeit des Umgebungsdrucks und der Temperatur in der Heiz-Kavität gesteuert werden. Dadurch lässt sich beispielsweise die Heiztemperatur energiegünstig optimieren werden. Insbesondere bei Ausführungsformen, welche auch ein Garen ermöglichen, ist lässt sich zudem verhindern, dass eine Speise mit einer zu hohen oder zu tiefen Temperatur zubereitet wird.

Diese Anordnung lässt sich auch ohne die Schaltvorrichtung verwenden. Diese Anordnung ist nicht nur auf Lunchboxen begrenzt, sondern sie lässt sich auch für andere Arten von Vorrichtungen zur Zubereitung von Nahrungsmitteln einsetzen. Die Vorrichtung muss zudem nicht zwingend zur Aufbewahrung oder zum Transport von Nahrungsmitteln geeignet sein. Beispielsweise ist es ein in einer Küchenkombination eingebauter Steamer oder ein Steamer für den Heimgebrauch.

Diese Vorrichtung weist dank der Steuerung der Heizleistung auf Grundlage der Kombination aus Aussendruckmessung und Heiz-Kavität-Temperaturmessung den Vorteil auf, dass sowohl auf fehleranfällige Ventile als auch auf teure Flüssigkeit-resistente Drucksensoren in der Heiz-Kavität verzichtet werden kann. Dies erhöht die Zuverlässigkeit der Vorrichtung und verringert gleichzeitig die Herstellungskosten.

Diese Vorrichtung eignet sich jedoch insbesondere für Lunchboxen. Sie schafft eine Lunchbox, welche kein Überdruckventil benötigt. Derartige Ventile können durch Lebensmittel verschmutzt werden und sind deshalb unhygienisch. Durch die Verschmutzung besteht zudem die Gefahr, dass sie bei Bedarf nicht oder nicht genügend öffnen. Wenn sie sich öffnen, ist der Energieverlust durch den austretenden Dampf jedoch relativ hoch, so dass die Erwärmung länger dauert und mehr Energie als notwendig verbraucht wird. Diese Nachteile werden durch den Einsatz mindestens eines Drucksensors behoben.

In bevorzugten Ausführungsformen ist die Lunchbox dazu eingerichtet, während des Heizvorgangs die Temperatur in der Heiz-Kavität in einem Bereich zu halten, welcher unter Berücksichtigung des Umgebungsdruckes bestimmt wird.

In bevorzugten Ausführungsformen mit einem zum Ermittlung des Umgebungsdruckes eingerichteten Drucksensors, einem zur Ermittlung der Temperatur in der Heiz-Kavität eingerichteten Temperatursensors sowie einer Steuerungsvorrichtung, ist die Lunchbox so eingerichtet, dass
- zu Beginn oder während eines Heizvorgangs über den Drucksensor der Umgebungsdruck gemessen wird;
- aus dem gemessenen Umgebungsdruck, z.B. über eine interne Datenbank, eine minimale Temperatur ermittelt wird, z.B. eine minimale Temperatur bei welcher Wasser verdampft, und
- das Heizelement so betrieben wird, dass während des Heizvorganges die in der Heiz-Kavität durch den Temperatursensor gemessene Temperatur oberhalb der minimalen Temperatur liegt.

Die Lunchbox ist vorzugsweise so eingerichtet, dass sie, wenn der Umgebungsdruck 1.033 bar beträgt, eine minimale Temperatur von 100°C festlegt, z.B. weil die Dampftemperatur von Wasser bei diesem Druck 100°C beträgt.

In bevorzugten Ausführungsformen mit einem zum Ermittlung des Umgebungsdruckes eingerichteten Drucksensors, einem zur Ermittlung der Temperatur in der Heiz-Kavität eingerichteten Temperatursensors sowie einer Steuerungsvorrichtung, ist die Lunchbox so eingerichtet, dass
- zu Beginn oder während eines Heizvorgangs über den Drucksensor der Umgebungsdruck gemessen wird;
- aus dem gemessenen Umgebungsdruck, z.B. über eine interne Datenbank, eine innerhalb der Heiz-Kavität maximale Temperatur ermittelt wird; und
- das Heizelement so betrieben wird, dass während des Heizvorganges die in der Heiz-Kavität durch den Temperatursensor gemessene Temperatur unterhalb der maximalen Temperatur liegt, z.B. so, dass das Heizelement ausgeschaltet wird, wenn während des Heizvorganges in der Heiz-Kavität durch den Temperatursensor eine Temperatur gemessen wird, welche die maximale Temperatur überschreitet.

Die Lunchbox ist beispielsweise so eingerichtet, dass sie, wenn der Umgebungsdruck 1.033 bar beträgt, eine maximale Temperatur von 106°C festlegt, z.B. weil die Dampftemperatur von Wasser bei einem um 0.3 bar höheren Druck 106°C beträgt und deswegen, wenn die Temperatur unter 106°C liegt, der Druckunterschied zwischen der Heiz-Kavität und der Umgebung maximal 0.3 bar beträgt.

In bevorzugten Ausführungsformen weist die Lunchbox ein redundantes Sensorsystem zur Heizleistungssteuerung auf, um die Sicherheit noch zu erhöhen. Vorzugsweise weist die Lunchbox zwei Sets von Sensoren auf, z.B. jeweils aufweisend einen Aussendruck-Sensor und einen Heiz-Kavität-Temperatursensor. Die Steuerungsvorrichtung ist vorzugsweise dazu eingerichtet, den Heizvorgang zu unterbrechen, wenn mindestens ein Teil des Sensorsystems Werte ausserhalb der als sicher eingestuften Werte erfasst. Das redundante Sensorsystem reduziert dadurch die Fehleranfälligkeit.

Die Lunchbox weist vorzugsweise eine Signalausgabeeinheit auf. Die Signalausgabeeinheit ist zur Ausgabe eines akustischen und/oder optischen Signals eingerichtet. Eine optische Signalausgabeeinheit kann als Leuchteinheit, z.B. aufweisend eine oder mehrere LEDs, ausgebildet sein und kann dazu eingerichtet sein in ein, zwei oder mehr Farben zu leuchten.

Die Signalausgabeeinheit weist in bevorzugten Ausführungsformen beispielsweise an,
- ob das Heizelement aktiviert ist,
- einen Fortschritt (insbesondere einen Abschluss) eines Erwärmungs- oder Steaming-Vorgang,
- einen Ladezustand des Akkumulators,
- eine Temperatur in der Heiz-Kavität und/oder Nahrungsmittel-Kavität,
- Fehlermeldungen, und/oder
- einen Füllstand in der Heiz-Kavität.

In bevorzugten Ausführungsformen weist die Lunchbox ein User Interface auf, über welches der User einen Heizvorgang starten kann. Das User Interface weist beispielsweise einen Schalter auf. Das User Interface ist vorzugsweise dazu eingerichtet, dass der Benutzer einen Heizvorgang abbrechen kann.

In bevorzugten Ausführungsformen mit einer Steuerungseinheit, einem zur Erfassung der Temperatur in der Heiz-Kavität eingerichteter Temperatursensor und einer Signalausgabeeinheit, ist die Steuerungseinheit dazu ausgebildet, ein Signal auszugeben, wenn nach dem Anheizen des Heizelementes nicht ausreichend schnell ein Temperaturanstieg erfassbar ist. Ein solcher Fall kann z.B. auftreten, wenn kein oder zu wenig Wasser in der Heiz-Kavität ist, worauf der Benutzer durch das Signal aufmerksam gemacht werden kann.

Da sich nicht nur das Wasser, sondern auch die Luft in der Lunchbox erwärmt, kann dies zu einem unerwünscht hohen Druck im Innern führen. In einer bevorzugten Ausführungsform weist die Lunchbox deshalb eine sich während eines Aufheizens des Wassers nach aussen bewegende Wandung auf, die bei nach aussen dichter Lunchbox eine Volumenvergrösserung in einem Innenraum der Lunchbox ermöglicht. Beispielsweise ist der Deckel der Lunchbox flexibel ausgebildet, so dass er eine Volumenänderung beim Aufheizen des Innenraums ermöglicht. Der Deckel kann sich beispielsweise beim Verschliessen selbststätig oder durch manuellen Druck nach innen wölben und sich während des Aufheizens der Lunchbox nach aussen bewegen. In alternativen Ausführungsformen lässt sich der gesamte Deckel von Hand oder selbsttätig mittels des Überdrucks nach oben bewegen, um so während des Aufheizens das Volumen zu vergrössern.

Die äussere Dichtung ist vorzugsweise derart ausgebildet, dass sie bei einem vordefinierten Innendruck öffnet bzw. leckt. Ist die äussere Dichtung ein Dichtring, so wird er vorzugsweise bei einem bestimmten Innendruck undicht. Dadurch wird ein zu hoher Überdruck im Innern der Lunchbox vermieden. In bevorzugten Ausführungsformen ist die Lunchbox bis zu einem Druckunterschied von 0.3 bar dicht und sie leckt bzw. sie öffnet sich ab einem Druckunterschied zwischen Innendruck und Aussendruck von mindestens 0.31 bar und spätestens bei 0.49 bar.

Mittels der Steuerungseinheit lässt sich vorzugsweise überprüfen, ob die Luft ganz oder teilweise aus der Lunchbox entwichen ist. Wenn das Essen und der Heizraum wieder abkühlen, kann ein Unterdruck entstehen, was ein Öffnen der Lunchbox erschwert. Auch dies lässt sich in einigen Ausführungsformen mittels der Steuerung vermeiden. Wird bei Überdruck oder Unterdruck festgestellt, dass die Lunchbox undicht ist, erfolgt in einigen Ausführungsformen ein automatischer Druckausgleich. In all diesen Varianten sind ein erster Temperatursensor vorhanden, der die Temperatur in der Heizkavität ausserhalb des Wassers bestimmt, und ein zweiter Temperatursensor, der die Wassertemperatur im Wasser der Heizkavität bestimmt. Es können noch weitere Temperatursensoren vorhanden sein. Ein Drucksensor ist für diese Steuerung nicht zwingend notwendig.

Die Vorrichtung weist in dieser Ausführungsform vorzugsweise eine Nahrungsmittel-Kavität zur Aufnahme von Nahrungsmitteln; eine Heiz-Kavität mit einer Wasser-Kavität zur Aufnahme von Wasser und ein Heizelement zur Erwärmung von Wasser in der Wasser-Kavität auf. Sie umfasst ferner einen ersten Temperatursensor, welcher dazu eingerichtet ist, eine Temperatur innerhalb der Heiz-Kavität, jedoch ausserhalb der Wasser-Kavität zu erfassen, sowie einen zweiten Temperatursensor, welcher dazu eingerichtet ist, eine Temperatur innerhalb der Wasser-Kavität zu erfassen. Eine Steuerungsvorrichtung ist dazu eingerichtet, eine Heizleistung des Heizelementes in Abhängigkeit der vom ersten und zweiten Temperatursensor erfassten Daten zu steuern. Dadurch lässt sich verhindern, dass ein Überdruck über längere Zeit anhält und das gesamte Wasser aus der Lunchbox entweicht. Zudem lässt sich so verhindern, dass sich der Innenraum zu fest abkühlt und aufgrund eines entstehenden Unterdrucks ein Öffnen der Lunchbox verunmöglicht wird.

Anhand der durch den im Wasser befindlichen ersten Temperatursensor wird die Siedetemperatur des Wassers gemessen. Hieraus ergeben sich Rückschlüsse auf den herrschenden absoluten Innendruck. Anhand des zweiten Temperatursensors lässt sich je nach Position und Fortschritt des Erwärmvorgangs die Temperatur im Wasserdampf, im Dampf-Luftgemisch bzw. in der Luft in der Heizkavität messen.

Eine Lunchbox mit derart angeordneten zwei Temperatursensoren lässt sich auch ohne die Merkmale der Schaltvorrichtung verwenden.

Eine Nahrungsmitteleinheit weist vorzugsweise einen zuvor beschriebenen Behälter der vorgestellten portablen Lunchbox sowie ein darin befindliches Nahrungsmittel auf. Die Nahrungsmitteleinheit weist ferner einen Nahrungsmitteleinheit-Deckel auf, um das Nahrungsmittel, bevorzugt gas- und/oder flüssigkeitsdicht, zwischen Behälter und Nahrungsmitteleinheits-Deckel einzuschliessen. Die Nahrungsmitteleinheit wird - möglicherweise nach Entfernen einer Verpackung wie z.B. dem Nahrungsmitteleinheit-Deckel - in der Lunchbox angeordnet, wobei der Behälter der Nahrungsmitteleinheit den Behälter der Lunchbox ersetzt. Das Nahrungsmittel der Nahrungsmitteleinheit kann dann wie zuvor beschrieben erwärmt und/oder gedämpft werden. Insbesondere bei zum Steamen geeigneten Nahrungsmitteln kann der Behälter der Nahrungsmitteleinheit Öffnungen aufweisen, durch welche Wasserdampf ziehen kann. Ein Boden des Behälters kann beispielweise als Rost ausgebildet sein.

Je nach Ausführungsform ist der Behälter mit einer einzigen Kavität versehen oder er ist unterteilt. In jedem Teil der Einheit kann beispielsweise ein anderes Nahrungsmittel angeordnet sein. Einzelne Teile können geschlossen oder mit Öffnungen versehen sein.

Beispielsweise kann eine Nahrungsmitteleinheit zwei Teile aufweisen, wobei im ersten Teil ein ohne Dampfkontakt und im zweiten Teil ein mittels Wasserdampf zu erwärmendes , also zu steamendes Nahrungsmittel angeordnet ist. Die beiden Teile können so verpackt sein, dass sie unabhängig voneinander öffenbar sind. Zur Zubereitung wird dann z.B. nur der Teil mit dem zu steamenden Nahrungsmittel geöffnet und die Lunchbox im zweiten Zustand der Schaltvorrichtung betreiben. Dadurch wird das Nahrungsmittel in dem geöffneten Teil gesteamt, währenddessen der andere Teil thermisch isoliert bleibt und so nur erwärmt wird.

Weitere Ausführungsformen sind in den abhängigen Ansprüchen angegeben. 8ie

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Darstellung einer erfindungsgemässen Lunchbox in einer ersten Ausführungsform;
- Fig. 2: eine Explosionszeichnung der Lunchbox gemäss Figur 1;
- Fig. 3: eine Seitenansicht der Lunchbox gemäss Figur 1;
- Fig. 4: einen Querschnitt durch die Lunchbox gemäss Figur 1;
- Fig. 5: eine vergrösserte Darstellung eines Ausschnitts der Lunchbox gemäss Figur 4;
- Fig. 6: eine Seitenansicht der Lunchbox gemäss Figur 1 in einem Steaming-Modus;
- Fig. 7: einen Querschnitt durch die Lunchbox gemäss Figur 6;
- Fig. 7a: eine vergrösserte Darstellung eines Ausschnitts der Lunchbox gemäss Figur 7;
- Fig. 8: eine perspektivische Darstellung einer Dichtung der Lunchbox gemäss Figur 1;
- Fig. 9: eine Ansicht eines Deckels gemäss Figur 1 von unten ohne Dichtung;
- Fig. 10: eine Ansicht des Deckels der Lunchbox gemäss Figur 9 mit der Dichtung gemäss Figur 8 von unten;
- Fig. 11: eine perspektivische Darstellung eines Bodens der Lunchbox gemäss Figur 1 mit einem eingesetzten Behälter;
- Fig. 12: eine Seitenansicht des Bodens mit eingesetztem Behälter gemäss Figur 11;
- Fig. 13: eine perspektivische Darstellung des Bodens gemäss Figur 11 ohne Behälter;
- Fig. 14: eine Ansicht des Bodens gemäss Figur 13 von oben;
- Fig. 15: eine Ansicht einer Platine der Lunchbox gemäss Figur 1;
- Fig. 16: eine perspektivische Darstellung einer Nahrungsmitteleinheit zur Verwendung in der Lunchbox gemäss Figur 1;
- Fig. 17: ein Flussdiagramm einer Bedienung der Lunchbox gemäss Figur 1;
- Figur 18: einen Querschnitt durch einen Teil einer erfindungsgemässen Lunchbox in einer zweiten Ausführungsform bei geöffneter Gasverbindung;
- Figur 19: einen Querschnitt durch den Teil der Lunchbox gemäss Figur 18 mit geschlossener Gasverbindung;
- Figur 20: eine Ansicht des Deckels der Lunchbox gemäss Figur 18 von unten;
- Figur 21: einen Querschnitt durch einen Teil einer erfindungsgemässen Lunchbox in einer dritten Ausführungsform bei geöffneter Gasverbindung;
- Figur 22: einen Querschnitt durch den Teil der Lunchbox gemäss Figur 21 mit geschlossener Gasverbindung;
- Figur 23: eine perspektivische Darstellung eines Schaltelements der Lunchbox gemäss Figur 21;
- Figur 24: eine weitere perspektivische Darstellung eines Schaltelements der Lunchbox gemäss Figur 21;
- Figur 25: einen Querschnitt durch einen Teil einer erfindungsgemässen Lunchbox in einer vierten Ausführungsform bei geöffneter Gasverbindung;
- Figur 26: einen Querschnitt durch den Teil der Lunchbox gemäss Figur 25 mit geschlossener Gasverbindung;
- Figur 27: einen Querschnitt durch einen Teil einer erfindungsgemässen Lunchbox in einer fünften Ausführungsform bei geschlossener Gasverbindung;
- Figur 28: einen Querschnitt durch den Teil der Lunchbox gemäss Figur 27 mit geöffneter Gasverbindung;
- Figur 29: einen Querschnitt durch einen Teil einer erfindungsgemässen Lunchbox in einer sechsten Ausführungsform bei geschlossener Gasverbindung und
- Figur 30: einen Querschnitt durch den Teil der Lunchbox gemäss Figur 29 mit geöffneter Gasverbindung.

### BESCHREIBUNG BEVORZUGTER AUSFÜHRUNGSFORMEN

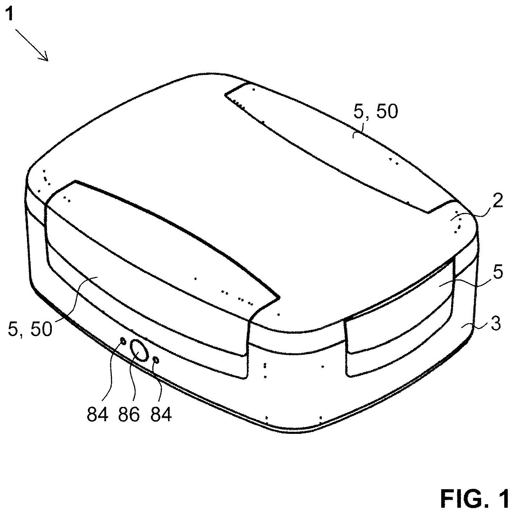

**Figur 1** zeigt eine perspektivische Darstellung einer erfindungsgemässen Lunchbox. Die gezeigte Lunchbox 1 weist einen Deckel 2 auf, welcher mit Befestigungselementen 5 in Form von klappbaren Laschen an einen Boden 3 befestigt ist. Der Deckel 2 ist vorzugsweise vollständig vom Boden 3 entfernbar, so dass eine Öffnung des Bodens 3 vollständig freiliegt. Die Laschen 5, 50 sind vorzugsweise am Deckel 2 schwenkbar befestigt.

Zwei der Laschen sind zudem als Schaltvorrichtung 50 ausgebildet, mit welchen zwischen einem Erwärm-Modus und einem Steaming-Modus geschaltet werden kann. Vorzugsweise ist an jeder Seite des Deckels 2 eine Lasche 5 angeordnet, wobei vorzugsweise die einander gegenüberliegenden grösseren Laschen 50 auf den Längsseiten des Deckels als Schaltvorrichtung ausgebildet sind. Die Laschen 50, welche als Schaltvorrichtung ausgebildet sind, sind vorzugsweise als annähernd rechtwinklige Winkelelemente ausgeführt. Sie erstrecken sich vorzugsweise teilweise über die Oberseite des Deckels 2, wobei sie im geschlossenen Zustand der Lunchbox 1 vorzugsweise mit der Oberfläche des Deckels 2 fluchten.

Die Lunchbox 1 ist vorzugsweise annähernd quaderförmig ausgebildet. Sie kann jedoch auch andere Formen aufweisen. Vorzugsweise ist der Boden 1 auf seiner Unterseite flach ausgebildet zur Auflage auf einem Tisch oder er weist entsprechende Füsse auf. Vorzugsweise weist die Lunchbox 1 im geschlossenen Zustand keine vorstehenden Elemente auf.

An einer Vorderseite der Lunchbox 1 sind in dem Boden 3 ein User Interface 86 in Form eines Druckknopfes, mit dem z.B. ein Heizvorgang initiiert werden kann, sowie zwei Signalausgabeeinheiten 84 in Form von LED-Leuchten, welche z.B. als Statusanzeige oder Warnsignale dienen können, angeordnet.

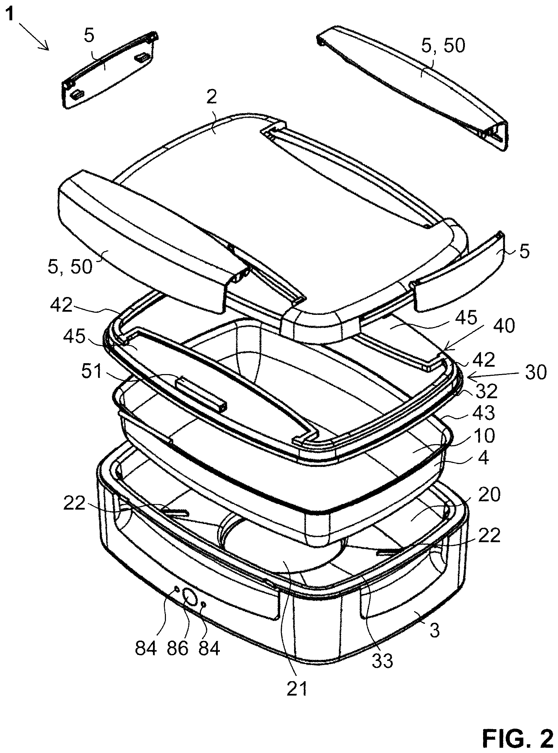

**Figur 2** zeigt eine Explosionszeichnung der Lunchbox 1. Zwischen dem Deckel 2 und dem Boden 3 ist ein Behälter 4 zur Aufnahme von Nahrungsmitteln angeordnet. Der Deckel 2, der Boden 3, der Behälter 4 sowie die Laschen 5, 50 sind vorzugsweise aus Kunststoff gefertigt. Teile davon können auch aus Metall oder einem anderen Material gefertigt sein.

Der Behälter 4 definiert eine Nahrungsmittel-Kavität 10 zur Aufnahme der zu erwärmenden Speisen oder gegebenenfalls zu garenden Lebensmittel. Der Boden 3 definiert eine Heiz-Kavität 20, um Wasser für die Erwärmung oder zum Dämpfen der Nahrungsmittel aufzunehmen. Zwischen dem Deckel 2 einerseits und dem Boden 3 sowie dem Behälter 4 andererseits ist eine Dichtung angeordnet, welche eine erste Dichtung 40 und eine zweite Dichtung 30 aufweist. Die erste und zweite Dichtung 40, 30 können aus zwei voneinander getrennten Elementen bestehen oder sie können gemeinsam einstückig ausgebildet sein. In diesem Beispiel sind sie gemeinsam einstückig ausgebildet.

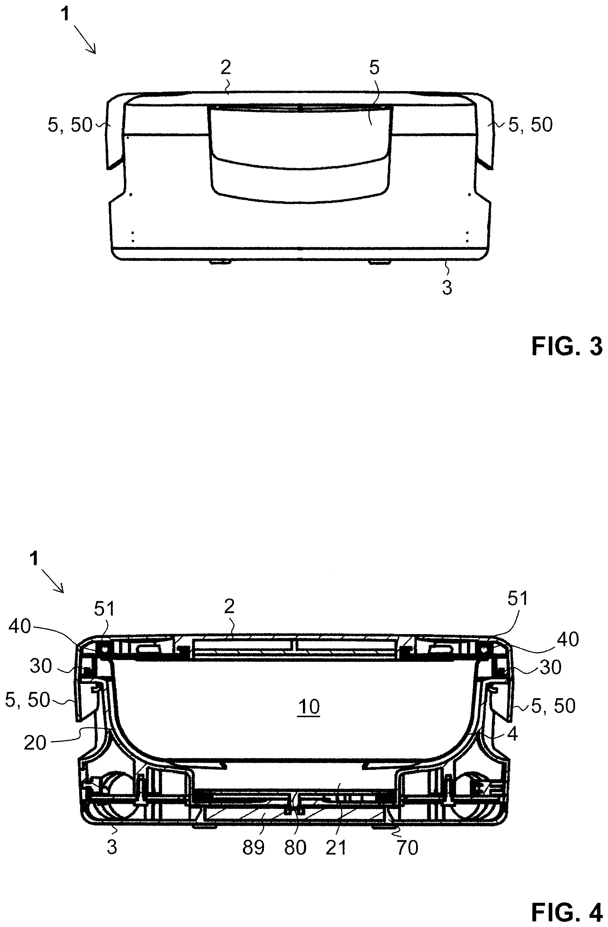

**Figur 3** zeigt eine Seitenansicht der Lunchbox 1 im geschlossenen Zustand. Dieser Zustand dient dem Transport der Lunchbox, zur Aufbewahrung der Nahrungsmittel und auch zum Erwärmen der Speisen ohne Dampfbeaufschlagung. Dieser Zustand wird im folgenden Erwärm-Modus genannt.

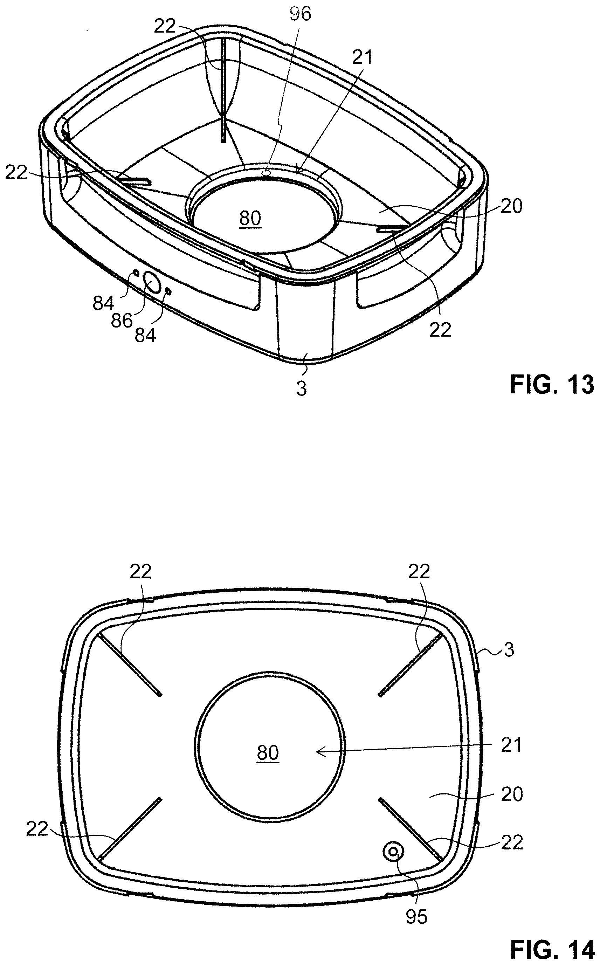

**Figur 4** zeigt einen Querschnitt der Lunchbox 1 im Erwärm-Modus. Die beiden als Schaltvorrichtung 50 ausgebildeten Laschen sind in einem ersten, heruntergedrückten Zustand, so dass sie die erste Dichtung 40 gegen einen umlaufenden oberen Rand 43 des Behälters 4 drücken. Dieser Rand ist in Figur 2 erkennbar. Dadurch ist der obere Rand 43 umlaufend gedichtet und eine Gas-Verbindung zwischen Heiz-Kavität 20 und der Nahrungsmittel-Kavität 10 ist geschlossen. Es kann kein Wasserdampf in die Nahrungsmittel-Kavität 10 gelangen. Stattdessen wird durch den Wasserdampf die Aussenseite des Behälters 4 und somit auch die im Behälter 4 angeordneten Nahrungsmittel (nicht dargestellt) erwärmt. In diesem ersten Zustand der Schaltvorrichtung 50 können also in der Nahrungsmittelkavität 10 angeordnete Nahrungsmittel erwärmt werden. Der Wasserdampf wird in der Heiz-Kavität 20 erzeugt, genauer in einer in **Figur 13** dargestellten Wasser-Kavität 21, welche Teil der Heiz-Kavität 20 ist.

Die zweite Dichtung 30 wird von dem unteren Rand des Deckels 2 gegen einen oberen Rand 33 des Bodens 3 gedrückt und dichtet die Heiz-Kavität 20 und somit auch die Nahrungsmittel-Kavität 10 gasdicht nach aussen ab, so dass kein Inhalt, wie beispielsweise Wasserdampf oder Wasser oder Nahrungsmittel, das System verlassen kann. Der obere Rand 33 des Bodens 3 ist in Figur 2 gut erkennbar. Dadurch ist die Lunchbox für den Transport dicht verschlossen. Ferner können bei der Aufbewahrung und auch beim Zubereiten der Speisen keine Gerüche nach aussen gelangen. Die zwei Dichtungen 30, 40 verschliessen die Lunchbox zudem doppelt, so dass auch optimaler Auslaufschutz gewährleistet ist.

In einer Elektronik-Kavität 70 des Bodens 3 sind das Heizelement 80 sowie weitere elektronische Komponenten angeordnet, beispielsweise eine Platine 89, an der das User Interface 86 und die Signalausgabeeinheit 84 angeschlossen sind. Der Boden 3 weist vorzugsweise einen unteren Deckel auf, welcher zumindest bei der Montage einen Zugang zur Elektronik-Kavität 70 ermöglicht.

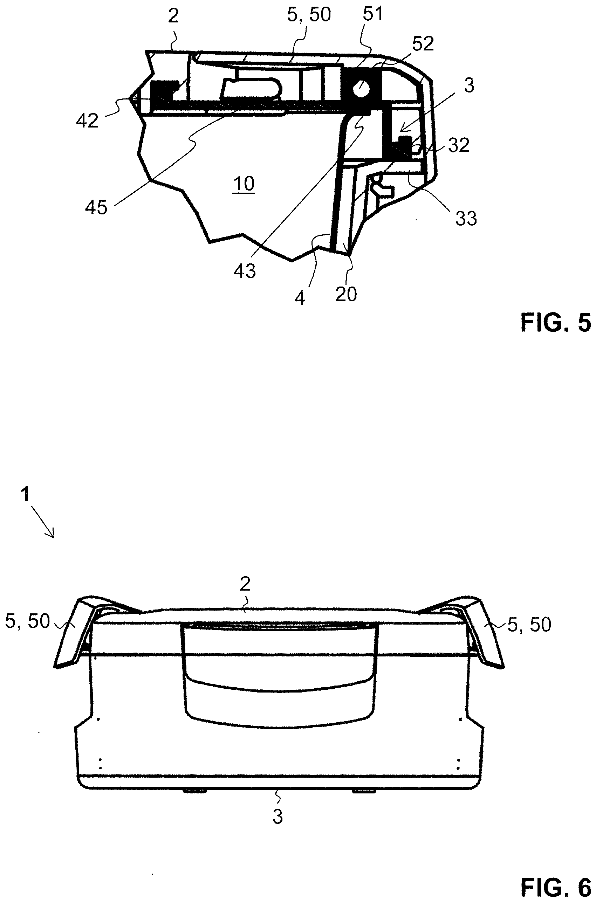

**Figur 5** zeigt einen vergrösserten Ausschnitt eines Querschnittes der Lunchbox 1 im Erwärm-Modus. Deutlich zu erkennen ist, dass die als Schaltvorrichtung 50 ausgebildeten Lasche heruntergedrückt ist und so die erste Dichtung 40 gegen den oberen Rand 43 des Behälters 4 drückt, wodurch eine Gas-Verbindung zwischen Heiz-Kavität 20 und der Nahrungsmittel-Kavität 10 geschlossen ist.

**Figur 6** zeigt eine Seitenansicht der Lunchbox 1 im Steaming-Modus. Die beiden als Schaltvorrichtung 50 ausgebildeten Befestigungselemente 5 sind in einem zweiten, gehobenen Zustand, in denen sie auch den Deckel 2 nicht mehr am Boden 3 befestigen. Die zwei anderen Laschen 5 verschliessen die Lunchbox jedoch nach wie vor.

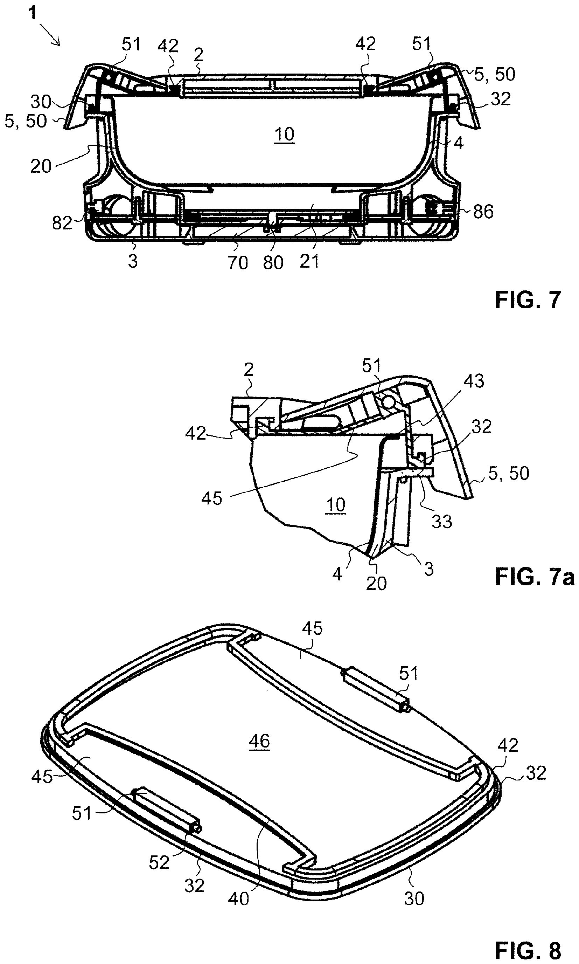

**Figur 7** zeigt einen Querschnitt der Lunchbox 1 im Steaming-Modus. Die beiden als Schaltvorrichtung 50 ausgebildeten Befestigungselemente 5 befinden sich in einem zweiten, gehobenen Zustand, so dass sie, z.B. wie dargestellt über eine mechanische Verbindung 51, die erste Dichtung 40 anheben, wodurch eine Gas-Verbindung zwischen Heiz-Kavität 20 und der Nahrungsmittel-Kavität 10 geöffnet ist. Durch diese kann Wasserdampf, welcher in der Heiz-Kavität 20 durch Verdampfen von Wasser erzeugt wurde, in die Nahrungsmittel-Kavität 10 gelangen und dort angeordnete Nahrungsmittel steamen.

Auch in diesem zweiten Zustand der Schaltvorrichtung 50 wird die zweite Dichtung 30 von dem unteren Rand des Deckels 2 gegen den oberen Rand 33 des Bodens 3 gedrückt und dichtet die Gesamtheit aus Heiz-Kavität 20 und Nahrungsmittel-Kavität 10 gasdicht nach aussen ab, so dass kein Wasserdampf das System verlassen kann.

**Figur 7a** zeigt den Zustand bei angehobener Lasche und mit geöffneter Gas-Verbindung. Der Dichtflügel 45 ist gemeinsam mit der Klappe bzw. Lasche 50 angehoben. Der obere Rand 43 des Behälters 4 ist im Bereich des Dichtflügels 45 freigelegt und die Gas-Verbindung zwischen Heiz-Kavität 20 und Nahrungsmittel-Kavität 10 ist offen. Der zweite Dichtring 32 der zweiten Dichtung 30 liegt jedoch nach wie vor auf dem oberen Rand 33 des Bodens 3 auf und dichtet über den gesamten Umfang des Bodens 3 nach aussen hin ab.

**Figur 8** zeigt die einstückige Dichtung aufweisend die erste Dichtung 40 und die zweite Dichtung 30. Sie ist vorzugsweise aus Silikon gefertigt. Die zweite Dichtung 30 weist einen zweiten Dichtring 32 auf, welcher in der dargestellten Orientierung nach unten absteht, im Gebrauchszustand jedoch nach oben gerichtet ist, jedoch eine nach unten gerichtete Dichtfläche aufweist. Die erste Dichtung 40 weist einen ersten Dichtring 42 auf, welcher aber nach oben absteht, sowie zwei Dichtflügel 45, auf welchen jeweils ein mechanisches Verbindungselement befestigt ist, über welche die Schaltvorrichtung zumindest ein Teil der erste Dichtung 40, insbesondere die Dichtflügel 45, anheben kann.

Das mechanische Verbindungselement ist in diesem Beispiel eine steife quaderförmige Hülse 51 aus Kunststoff mit einem beidseitig vorstehenden steifen Stift 52. Der mittlere Bereich 46 ist leer, d.h. die Dichtung ist lediglich durch einen umlaufenden in sich geschlossene ringförmige Struktur gebildet.

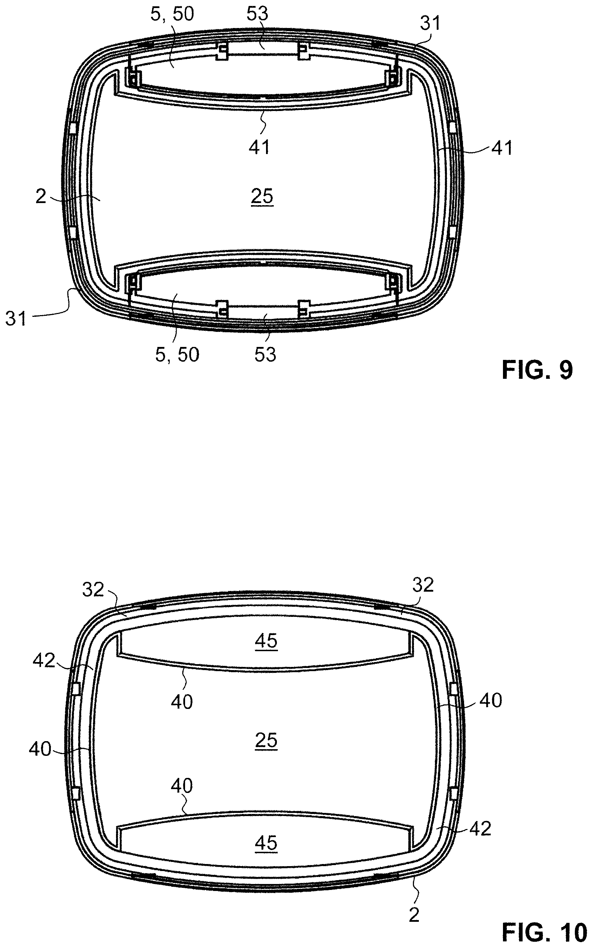

**Figur 9** zeigt den Deckel 2 von unten. Seine Unterseite ist mit dem Bezugszeichen 25 versehen. An der Unterseite des Deckels 2 sind erste Strukturen 41 und zweite Strukturen 31 angeordnet. Die ersten Strukturen 41 sind dazu eingerichtet mit dem ersten Dichtring 42 der ersten Dichtung 40 zu interagieren, z.B. diesen zur führen, dessen korrekten Sitz zu begünstigen und/oder dessen Dichteigenschaften zu verbessern. Beispielweise können die ersten Strukturen 41 einen aus dem Deckel 2 herausragenden ersten Sims aufweisen, an welchem der erste Dichtring 42 der ersten Dichtung 40 anliegt. Die Strukturen weisen vorzugsweise zwei aus dem Deckel 2 herausragende zweite Simse auf, zwischen welche der erste Dichtring 42 der ersten Dichtung 40 eingreift. Die beiden zweiten Simse verlaufen vorzugsweise im Wesentlichen parallel zueinander und sie sind vorzugweise nahe aneinander ausgebildet, so dass der erste Dichtring 42 der ersten Dichtung 40 dazwischen eingeklemmt ist. In **Figur 10** ist die einstückige Dichtung 30, 40 eingelegt.

Die zweiten Strukturen 31 sind dazu eingerichtet, mit dem zweiten Dichtring 32 der zweiten Dichtung 30 zu interagieren, z.B. diesen zur führen, dessen korrekten Sitz zu begünstigen und/oder dessen Dichteigenschaften zu verbessern. Die Strukturen weisen z.B. eine den Deckel 2 umlaufende Schulter auf, an welcher der zweite Dichtring 32 der zweiten Dichtung 30 anliegen kann und die den zweiten Dichtring 32 im geschlossen Zustand der Lunchbox gegen den Boden 3 drückt. In einer anderen Ausführungsform weisen die zweiten Strukturen 31 den den Deckel 2 umlaufenden Sims aufweisen, an welchem der zweite Dichtring 32 der zweiten Dichtung 30 anliegt und eingedrückt ist. In diesem Beispiel sind die zwei Strukturen 41 und 31 zwei umlaufende Nuten.

An den beiden Befestigungselementen 5 der Schaltvorrichtung 50 sind Strukturen 53 angeordnet, in welche die Verbindungselemente 51, 52 der ersten Dichtung eingreifen. Hierfür sind Aufnahmen 53 vorhanden. Beim Anheben der Befestigungselemente 5 werden die Verbindungselemente 51 und somit der dazu benachbarte Teil der Dichtung 40 mit angehoben werden. Dadurch wird die Gas-Verbindung zwischen Heiz-Kavität und Nahrungsmittel-Kavität geöffnet. Beim Herunterdrücken der Befestigungselemente 5 werden die Verbindungselemente 51 mit heruntergedrückt, wodurch die Gas-Verbindung zwischen Heiz-Kavität und Nahrungsmittel-Kavität geschlossen wird.

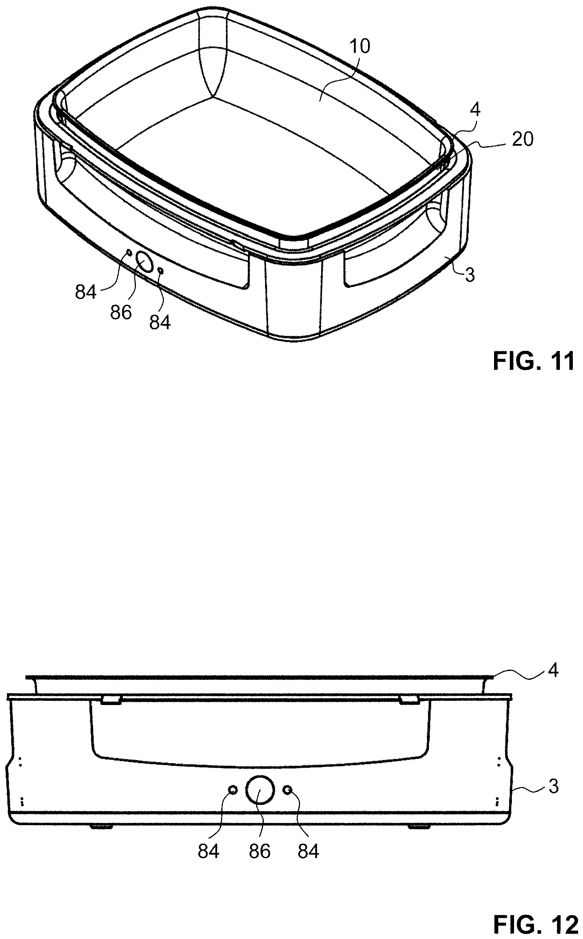

Die **Figuren 11 und 12** zeigen den Boden 3 mit dem darin eingesetzten Behälter 4. Der Behälter 4 ist als vertiefte Schale ausgebildet. Er weist einen seitlich abstehenden, flachen Rand auf, der oberhalb des oberen Randes des Bodens 3 hinausragt und vorzugsweise nicht auf diesem aufliegt. Durch einen Abstand zwischen Boden 3 und Behälter 4 kann Wasserdampf, welcher in der Wasser-Kavität 21 unterhalb des Behälters 4 erzeugt wird, durch die Heiz-Kavität 20 zwischen Boden 3 und Behälter 4 aufsteigen. Der der Behälter 4 den Bode 3 überragt, lässt er sich auch besser daraus entnehmen.

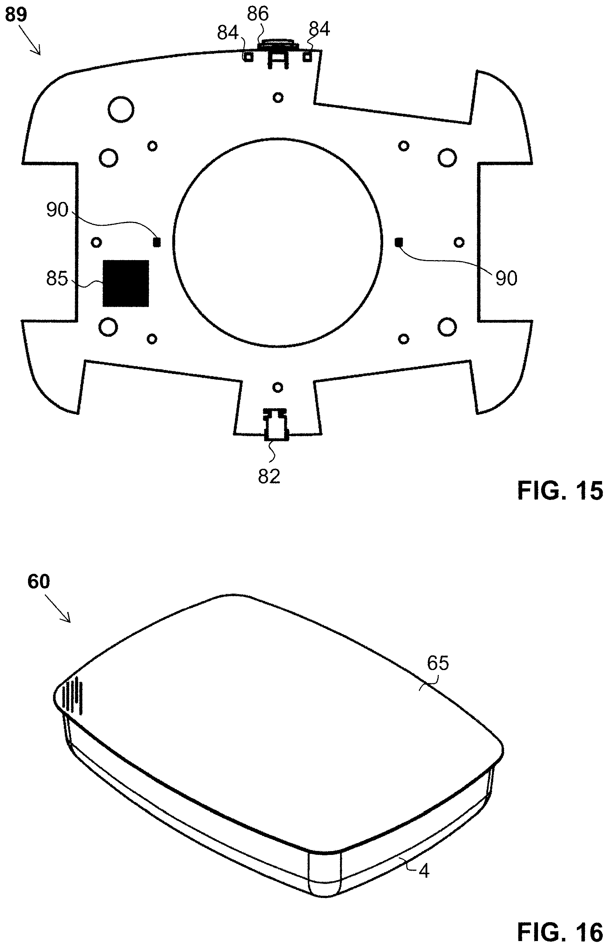

**Figur 16** zeigt eine bevorzugte Nahrungsmitteleinheit 60 vor dem Gebrauch. Sie weist den Behälter 4 sowie einen Deckel 65 auf. Der Deckel 65 ist vorzugsweise aus einer gasdichten Folie gebildet, welche lösbar auf dem oberen Rand des Behälters 4 aufgeklebt ist. Im Behälter 4 lassen sich somit Speisen zusammenstellen, welche bereits für die Erwärmung zubereitet oder für das Steamen vorbereitet sind. Die Einheit lässt sich somit in entsprechenden Verkaufsstellen den Konsumenten anbieten. Je nach Art der angebotenen Speisen wird der Deckel 65 vor Einführen des Behälters 4 in die Lunchbox ganz oder teilweise entfernt, so dass Wasserdampf an die Nahrungsmittel gelangen kann. Er kann jedoch bei anderen Zubereitungsarten auch auf dem Behälter 4 belassen werden.

**Figur 13** zeigt eine perspektivische Darstellung des Bodens 3. Der Boden 3 ist dazu eingerichtet einen unteren Teil der Heiz-Kavität 20 zu bilden. In der Mitte des Bodens der Heiz-Kavität 20 ist eine Vertiefung in Form der Wasser-Kavität 21 eingelassen, welche dazu eingerichtet ist, zu verdampfendes Wasser aufzunehmen. Der Rand der Wasser-Kavität 21 weist vorzugsweise einen umlaufenden Sims oder andere Merkmale auf, welche als Anzeige für einen maximalen oder einen bevorzugten Füllstand dient. Im Inneren der Heiz-Kavität 20 sind Stege 22 ausgebildet, welche so ausgebildet sind, dass ein in den Boden 3 eingesetzter Behälter auf Abstand bleibt, so dass Wasserdampf zwischen dem Boden 3 und dem Behälter aufsteigen kann. Wie dargestellt, kann der Boden 3 der Heiz-Kavität 20 mit Gefälle ausgebildet sein, bevorzugt so, dass auf dem Boden 3 der Heiz-Kavität 20 befindliches Wasser und Kondenswasser in die Wasser-Kavität 21 zurück fliessen kann. Das Heizelement 80 ist vorzugsweise an oder unterhalb der Wasser-Kavität 21 angeordnet.

**Figur 14** zeigt den Boden 3 von oben. In dem Boden 3 ist vorzugsweise eine Ausnehmung ausgebildet, in der mindestens ein erster Temperatursensor 95 und/oder eine Kabelverbindung zwischen einem ersten Temperatursensor 95 und der im Inneren des Bodens 3 angeordneten Platine 89 angeordnet ist. Dieser erste Temperatursensor 95 kann auch innerhalb der Wasser-Kavität 21 angeordnet sein. Vorzugsweise befindet er sich jedoch im Bereich der Heizkavität, wo er mit Luft und/oder Wasserdampf und/oder mit einem Luft/Wasserdampfgemisch in Kontakt kommt.

In einigen Ausführungsformen ist ein zweiter Temperatursensor 96 vorhanden, der vorzugsweise in der Wasser-Kavität 21 angeordnet ist und somit im Wasser liegt. Sind beide Temperatursensoren 95, 96 vorhanden, ist je nach Ausführungsform kein Drucksensor vorhanden. Der zweite Temperatursensor ist in Figur 13 erkennbar.

**Figur 15** zeigt die Platine 89 der Lunchbox, wie sie vorzugsweise in der Elektronik-Kavität angeordnet ist. An der Platine 89 ist das User Interface 86 beispielsweise in Form des bereits erwähnten Druckknopfes, eine Steuerungsvorrichtung 85, die Signalausgabeeinheit 84 in Form mindestens einer LED-Leuchte, ein Stromanschluss 82 sowie mindestens einen Drucksensor 90 angeordnet. In der Mitte weist die Platine 89 ist eine Ausnehmung auf, in welche die Wasser-Kavität 21 des Bodens 3 eingreifen kann. Die Platine 89 weist vorzugsweise einen Anschluss zum Steuern und/oder Stromversorgen des Heizelementes 80 und/oder einen Anschluss zu einem Akkumulator und/oder eine Netzspeisung auf.

Die Platine 89 wird bevorzugt so angeordnet, dass sie Druck-mässig mit der Umgebung der Lunchbox in Kontakt steht, so dass der Drucksensor 90 den Umgebungsdruck erfassen kann. Hierzu reicht es beispielsweise, dass der untere Bereich der Lunchbox nicht luftdicht ausgebildet ist. Dadurch kann die Steuerungseinheit 85, welche eine Datenbank, z.B. in einem EEPROMs (nicht gezeigt), umfassen kann, eine minimal nötige Temperatur und/oder maximal zulässige Temperatur in der Heiz-Kavität festlegen, welche durch den in der Heiz-Kavität angeordneten ersten Temperatursensor 95 überwacht werden kann, und die Heizleistung des Heizelementes 80 entsprechend steuern.

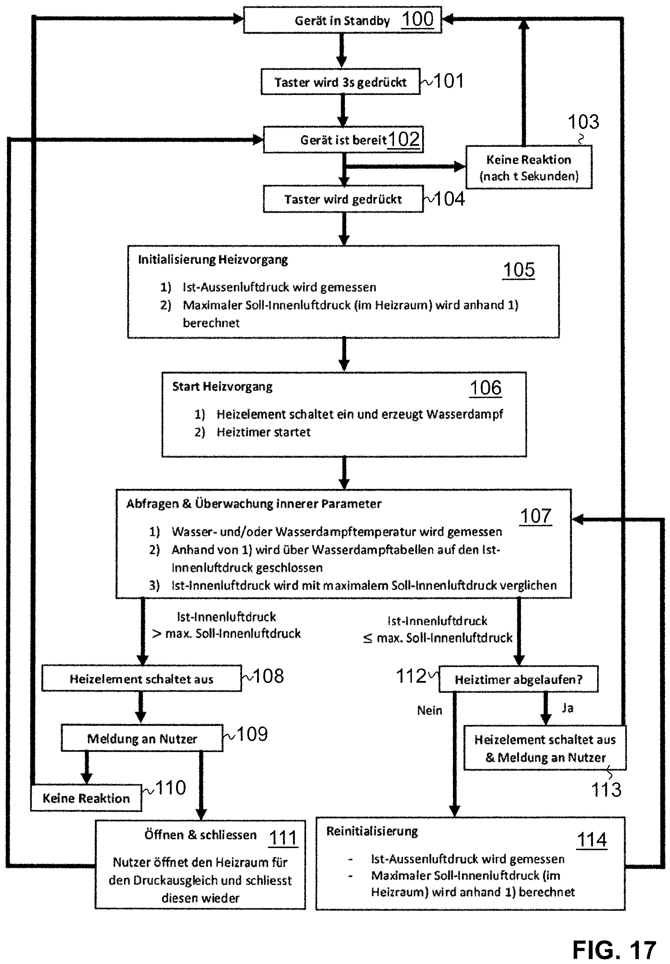

**Figur 17** zeigt ein mögliches Flussdiagramm für die Bedienung der Lunchbox. In Schritt 100 befindet sich das Gerät, also die Lunchbox, in einem Standby-Modus, in welcher der Energieverbrauch minimiert sein kann. Im Schritt 101 wird das Gerät aktiviert, beispielsweise durch Drücken des User Interfaces 86, so dass das Gerät in Schritt 102 bereit ist. Dies kann dem Benutzer z.B. durch die Signalausgabeeinheit 84, z.B. in Form einer grünen Leuchtanzeige, signalisiert werden.

Wenn über das User Interface für vordefinierte Zeit *t* keine weiteren Befehle eingegeben werden, schaltet sich das Gerät im Schritt 103 automatisch wieder in den Standby-Modus, um so wieder Strom sparen zu können. Wenn jedoch, wie in Schritt 104 gezeigt, der Benutzer einen Heizvorgang einleitet, wird in Schritt 105 der Heizvorgang initialisiert, wobei ein Ist-Aussenluftdruck, also ein Umgebungsdruck, gemessen wird und aus dem Messergebnis ein Maximaler Soll-Innendruck berechnet wird. Im nächsten Schritt 106 startet dann der Heizvorgang, wobei das Heizelement eingeschaltet, so dass - wenn sich in der Heitz-Kavität Wasser befindet - Wasserdampf, sei es zum Erwärmen oder zum Steamen von Nahrungsmitteln in der Nahrungsmittel-Kavität, erzeugt wird. Zudem wird ein Heiztimer gestartet. Die Aktivierung des Heizelementes kann dem User z.B. durch ein rotes Leuchtsignal der Signalausgabeeinheit 84 angezeigt werden.

Während des Heizvorgangs wird, z.B. permanent, periodisch oder in festgelegten Abständen, die inneren Parameter, also die Temperatur des Wassers bzw. Wasserdampfes innerhalb der Lunchbox, abgefragt und überwacht (Schritt 107). Anhand der gemessenen Temperatur kann, z.B. über eine Wasserdampftabelle, auf den Ist-Luftdruck geschlossen werden und dieser mit dem in Schritt 105 festgelegtem Soll-Innenluftdruck verglichen werden.

Wenn der Ist-Innenluftdruck grösser als der maximale Soll-Innendruck, wird in Schritt 108 das Heizelement ausgeschaltet und in Schritt 109 eine Meldung an den Benutzer, z.B. über ein rot blinkendes Warnsignal, ausgegeben. Wenn der Nutzer innerhalb eines bestimmten Zeitraumes keine Reaktion zeigt, kann das Gerät in Schritt 110 wieder in den Standby-Modus versetzt werden. Wenn der Benutzer jedoch in einem Schritt 111 den Heizraum öffnet und wieder schliesst und so den Druck ausgleicht, kann das Gerät wieder in einen Betriebsbereiten Modus versetzt werden, von dem aus der Benutzer das Gerät wieder starten kann.

Solange der Ist-Innenluftdruck kleiner oder gleich dem maximale Soll-Innendruck und der Heiztimer noch nicht abgelaufen ist, wird das Gerät, z.B. periodisch oder in festgelegten Abständen, reinitialisiert, wobei in Schritt 114 erneut der Ist-Aussenluftdruck gemessen und der maximale Soll-Innenluftdruck im Heizraum, also in der Heiz-Kavität, berechnet wird. Läuft der Heiztimer ab, wird in Schritt 113 das Heizelement abgeschaltet und eine entsprechende Meldung an den Benutzer, z.B. über ein grün blinkendes Signal, gegeben. Das Gerät kann dazu eingerichtet sein, dann wieder automatisch in den Standby-Modus zu schalten.

In der Ausführungsform, die den ersten Temperatursensor 95 ausserhalb des Wassers und den Temperatursensor 96 im Wasser aufweist, lässt sich die Steuereinheit zur Kontrolle und je nach Variante zur Steuerung der Dichtheit verwenden. Diese Ausführungsform ist vorzugsweise mit der Variante kombiniert, in der die äussere Dichtung ab einem bestimmten Druckunterschied zwischen Innen- und Aussendruck undicht wird bzw. öffnet.

In einer ersten Variante wird mit maximaler Leistung geheizt. Der absolute Innendruck steigt ab einem definierten relativen Druck nicht mehr an, da die äussere Dichtung leckt und die Heizkavität somit nicht mehr dicht ist. Der eingependelte absolute Innendruck wird mittels der durch den zweiten Temperatursensor 96 gemessenen Temperatur bestimmt, d.h. mittels der gemessenen Wassertemperatur. Der erste Temperatursensor 95 misst die Temperatur ausserhalb des Wassers, d.h. die Temperatur des Luft/Dampfgemischs. Es wird weiterhin mit maximaler Leistung geheizt, bis die vom ersten Temperatursensor 95 gemessene Temperatur, d.h. die Innentemperatur, ungefähr der Wassertemperatur entspricht. Ab diesem Zeitpunkt kann davon ausgegangen werden, dass die Luft aus der Lunchbox teilweise oder vollständig entwichen ist. Die Heizleistung wird nun reduziert, damit sich die äussere Dichtung wieder schliessen kann und die Heizkavität wieder dicht ist.

In einer anderen Variante wird die Heizleistung bereits kurz nach Erreichen des absoluten Innendrucks, der in Folge zur Undichtheit der Heizkavität führen würde, reduziert.

Die Schaltvorrichtung, welche eine Gas-Verbindung zwischen der Heizkavität und der Nahrungsmittel-Kavität ermöglicht oder verschliesst, lässt sich auf unterschiedliche Art und Weise gestalten. Entsprechend sind auch die Dichtungen, die Form des Deckels und gegebenenfalls auch die Form des oberen Bereichs des Bodens unterschiedlich ausgebildet. Nachfolgend sind einige Beispiele angegeben, wie sich die Schaltvorrichtung ausgestalten lässt. Die nicht beschriebenen bzw. nicht dargestellten Teile der erfindungsgemässen Lunchbox entsprechen vorzugsweise den Bauteilen gemäss dem ersten, oben ausführlich gezeigten und beschriebenen Ausführungsbeispiel.

Diese nachfolgend beschriebenen Ausführungsbeispiele haben den Vorteil, dass sie die Herstellungskosten der Lunchbox minimieren. Die nachfolgend beschriebenen Ausführungsbeispiele weisen einen Deckel 2 auf, der einen Boden 3 verschliesst. Der Deckel 2 kann vollständig vom Boden 3 entfernt oder an ihm angelenkt sein. Der Deckel 2 ist jeweils vorzugsweise in seiner geschlossenen Position fixierbar, damit die Lunchbox transportiert werden kann. Diese Verschlüsse sind nachfolgend nicht dargestellt. Es lassen sich beispielsweise Klappen und Laschen wie im ersten Beispiel verwenden, ohne dass diese eine Schaltfunktion zum Umschalten zwischen Steamen und Erwärmen aufweisen.

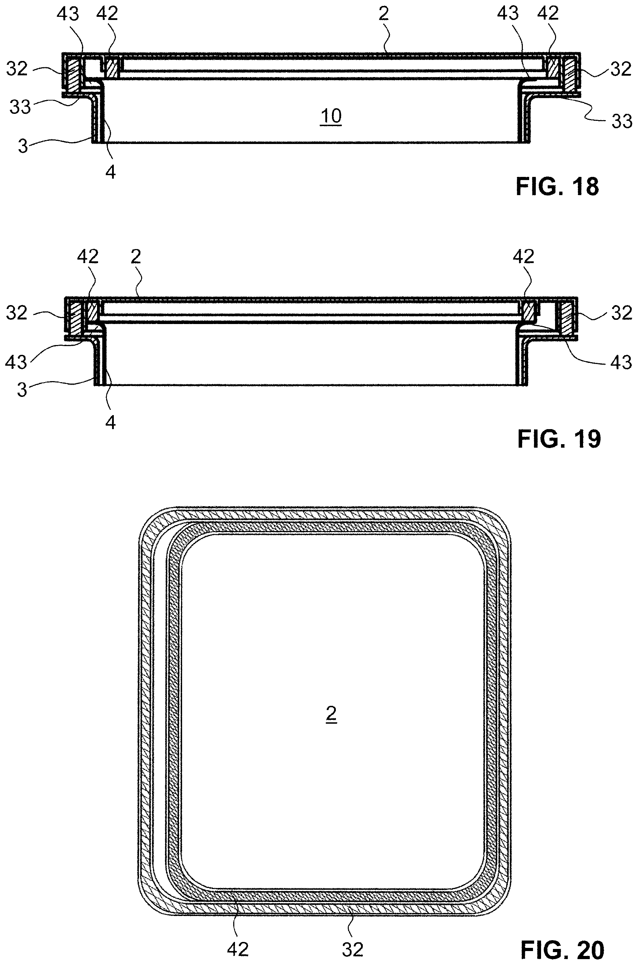

In den **Figuren 18 bis 20** ist ein zweites Ausführungsbeispiel der erfindungsgemässen Lunchbox dargestellt. Der Deckel 2 weist keine Laschen oder Klappen als Schaltvorrichtung mehr auf, sondern der Deckel 2 selber bildet die Schaltvorrichtung. Hierzu ist er asymmetrisch ausgebildet. Wie in **Figur 20** erkennbar ist, weist er zwei umlaufende Dichtringe 32, 42 auf, wobei der innere Dichtring 42 auf einer Längsseite des Deckels 2 einen grösseren Abstand zum äusseren Dichtring 32 aufweist als auf der gegenüberliegenden Längsseite. Entlang der zwei anderen Längsseiten verlaufen die zwei Dichtringe 32, 42 vorzugsweise im gleichbleibenden Abstand zueinander. Vorzugsweise ist der unterschiedliche Abstand entlang der längeren Längsseiten vorhanden. Der Deckel 2 weist vorzugsweise eine rechteckige Grundform auf. Andere Formen sind jedoch auch möglich, solange der Deckel 2 in zwei unterschiedlichen, wohldefinierten Positionen auf den Boden 3 aufgesetzt werden kann.

Der Boden 3 weist einen umlaufenden oberen Rand 33 auf, der ebenfalls nicht symmetrisch ausgebildet ist. Wie in den **Figuren 18 und 19** erkennbar ist, ist der Rand 33 auf einer Längsseite länger ausgebildet als auf der anderen Seite.

Der Deckel 2 lässt sich in einer ersten Schaltposition auf den oberen Rand 33 des Bodens 3 Boden 3 aufsetzen. Dabei dichtet der äussere Dichtring 32 gegenüber einem vorstehenden Flansch des Bodens 3. Der innere Dichtring 42 hat keine Dichtfunktion. Der obere Rand 43 des Behälters 4 ist nicht gedichtet. Die Gas-Verbindung zwischen der Nahrungsmittelkavität 10 und der Heizkavität ist offen. Sie verläuft zwischen den Seitenwänden des Bodens 3 und des Behälters 4. Die Lunchbox ist zum Steamen vorbereitet.

In **Figur 19** ist der Deckel 2 um 180° gedreht aufgesetzt, also in einer zweiten Schaltposition. Der äussere Dichtring 32 liegt nach wie vor auf dem oberen Rand 33 des Bodens 3 umlaufend dichtend auf. Nun liegt jedoch auch der innere Dichtring 43 umlaufend dichtend auf dem oberen Rand 43 des Behälters 4 auf. Die Gas-Verbindung zwischen der Nahrungsmittelkavität 10 und der Heizkavität ist geschlossen. Die Lunchbox ist zum Erwärmen vorbereitet.

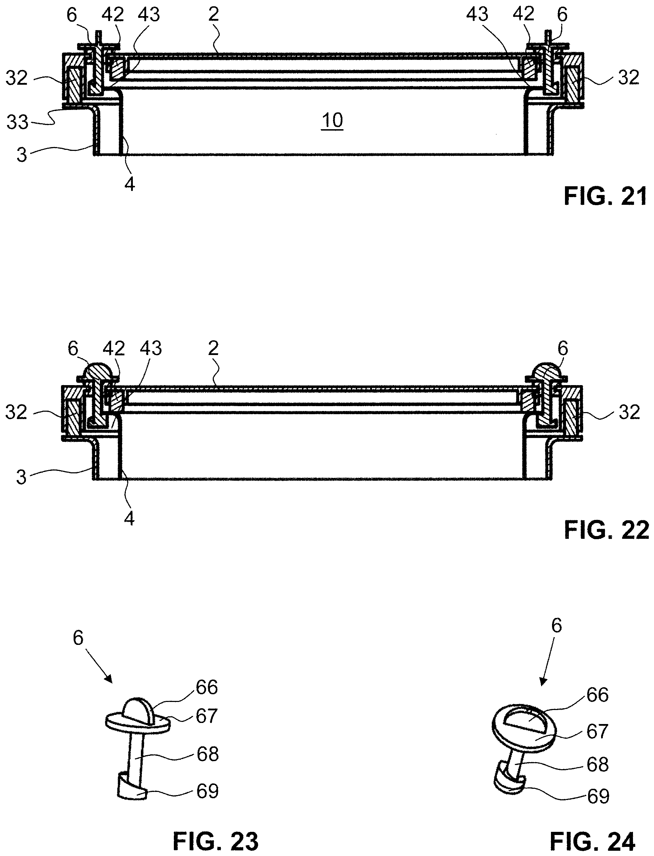

In den **Figuren 21 bis 24** ist eine weitere Ausführungsform der erfindungsgemässen Lunchbox gezeigt. Die Schaltvorrichtung weist mindestens einen, vorzugsweise zwei oder mehr Schalthebel 6 auf. Der Deckel 2 weist wie im vorherigen Beispiel einen nach unten gerichteten äusseren Dichtring 32 und einen ebenfalls nach unten gerichteten inneren Dichtring 42 auf. Jeder der zwei Dichtringe 32, 42 umläuft den Deckel 2 vollständig, wobei ihr Abstand zueinander und vorzugsweise auch ihr Abstand zum Deckelrand über den gesamten Umfang gleichbleibend sind. Der Behälter 4 weist vorzugsweise ebenfalls einen gleichbleibenden Rand auf, dies im Gegensatz zum vorherigen Beispiel.

Der Deckel 2 ist von mindestens einem, hier von zwei Schalthebeln 6 durchsetzt. Die Schalthebel 6 verlaufen zwischen dem inneren Dichtring 42 und dem äusseren Dichtring 32, wie in den **Figuren 21 und 22** gut erkennbar ist.

Durch Veränderung der Position des Schalthebels 6 lässt sich der Behälter 4 anheben, bis sein oberer Rand 43 am inneren Dichtring 42 anliegt und so umlaufend gedichtet ist. Dieses Anheben schliesst die Gas-Verbindung. Die geöffnete Steam-Position ist in **Figur 21** dargestellt. die geschlossene Erwärm-Position in **Figur** 22.

Der mindestens eine Schalthebel 6 kann unterschiedlich ausgebildet sein. Vorzugsweise lässt er sich durch vertikales Verschieben und/oder durch eine Drehbewegung von der Steam-Position in die Erwärmposition und umgekehrt bringen, wobei er durch diese Bewegung den Behälter 4 absenkt und wieder anhebt. Ein Beispiel für den Schalthebel 6 ist in den **Figuren 23 und 24** erkennbar. Er weist einen Griff 66 auf, der auf einem oberen Kopf 67 angeordnet ist. Der Kopf 67 ist auf einem Schaft 68 angeordnet, dessen freies Ende in einer schräg nach unten verlaufenden Kulisse 69 endet. Durch Drehen des Griffs 66 dreht sich die Kulisse 69, die unterhalb des oberen Randes 43 des Behälters 4 angeordnet ist. Der obere Rand 43 wird beim Drehen erfasst und nach oben mitgenommen.

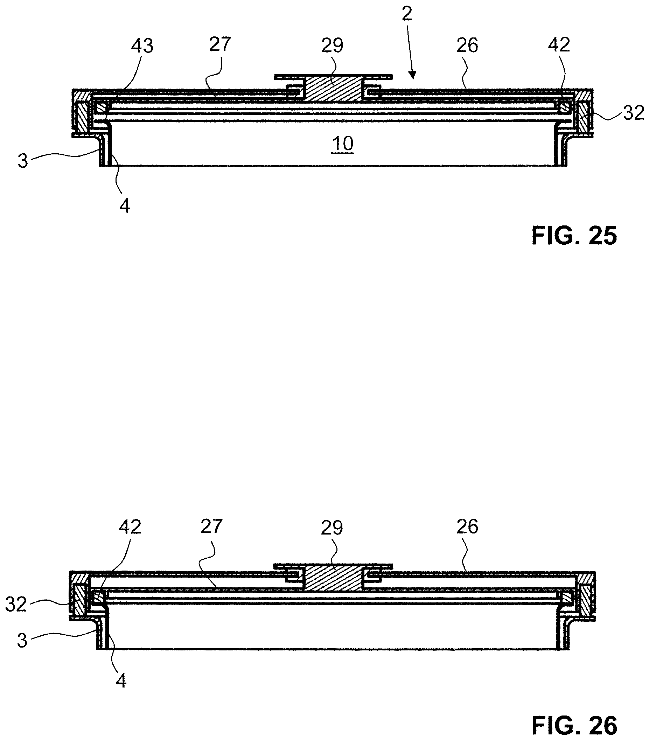

In den **Figuren 25 und 26** ist ein weiteres Beispiel vorhanden. Auch hier weist der Deckel 2 einen inneren Dichtring 42 und einen äusseren Dichtring 32 auf, welche beide nach unten gerichtet sind und dichtend auf dem oberen Rand 43 des Behälters 4 bzw. auf dem oberen Rand 33 des Bodens 3 aufliegen. Sie sind wieder vollständig umlaufend ausgebildet und weisen vorzugsweise über ihren gesamten Umfang denselben Abstand voneinander auf.

Der Deckel 2 ist in diesem Beispiel zweilagig ausgebildet, mit einer äusseren Deckelplatte 26 und einer inneren Deckelplatte 27. Der äussere Dichtring 32 ist an der äusseren Deckelplatte 26 angeordnet, der innere Dichtring 42 an der inneren Deckelplatte 27. Die zwei Platten 26, 27 sind in vertikaler Richtung verschiebbar zueinander angeordnet, so dass der Abstand der inneren Deckelplatte 27 zur äusseren Deckelplatte 26 verändern lässt.

In einer angehobenen Schaltposition liegt lediglich der äussere Dichtring 32 auf dem oberen Rand 33 des Bodens umlaufend dichtend an. Die innere Deckelplatte 27 ist angehoben und der innere Dichtring 42 endet dadurch beabstandet zum oberen Rand 43 des Behälters 4. Die Gas-Verbindung ist offen und die Lunch-Box ist bereit zum Steamen. Dies ist in **Figur 25** erkennbar.

In **Figur 26** ist die innere Deckelplatte 27 abgesenkt und der innere Dichtring 42 liegt auf dem oberen Rand 43 des Behälters 4 auf und dichtet den Behälterinnenraum 10 umlaufend zum Boden 3 hin ab. Die Gas-Verbindung ist geschlossen und die Lunchbox ist bereit zum Erwärmen.

Die Schaltvorrichtung zur Verschiebung der zwei Deckelplatten 26, 27 kann unterschiedlich ausgebildet sein. In diesem Beispiel ist ein Verschiebeknopf 29 vorhanden, der die innere Deckelplatte 27 anhebt und absenkt. Vorzugsweise ist der Verschiebeknopf geradlinig oder über eine Drehbewegung in seiner Position veränderbar.

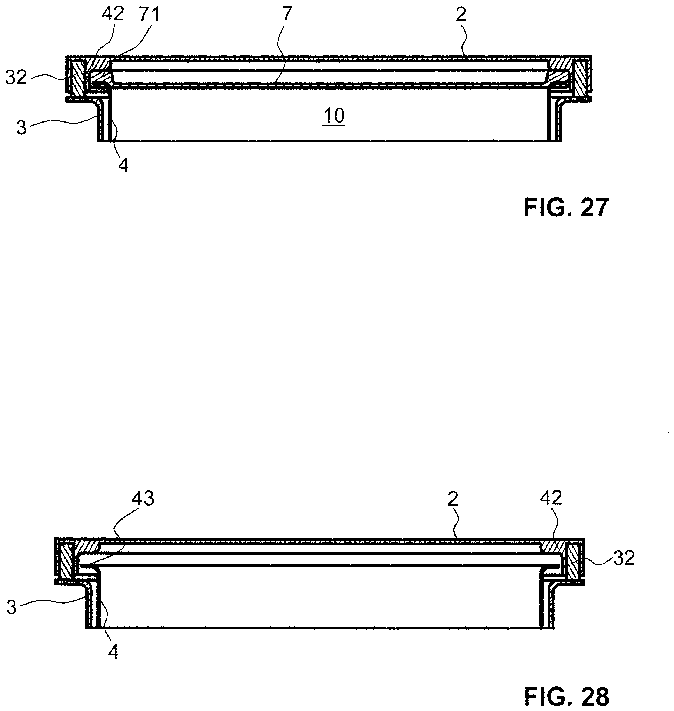

In der Ausführungsform gemäss den **Figuren 27 und 28** ist der Behälter 4 mit einem separaten Behälterdeckel 7 dicht verschlossen. Auf diesem Deckel 7 ist ein umlaufender Behälterdichtring 71 angeordnet, der nach oben gerichtet ist. Anstelle eines weichen Dichtrings 71 kann auch einfach eine umlaufende Erhöhung vorhanden sein, welche einen Dichtsitz bildet. Anstelle einer Erhöhung kann auch einfach der Behälterdeckel 7 genügend dick ausgebildet sein, um einen Dichtsitz zu bilden. Das Gegenstück zu dieser Dichtung bildet der nach unten gerichtete innere Dichtring 42, der am Deckel 2 angeordnet ist. Weist der Behälterdeckel 7 einen Dichtring auf, so kann der Deckel 2 anstelle des inneren Dichtrings 42 auch einen passenden Dichtsitz bilden.

Der Deckel 2 weist wiederum den nach unten gerichteten äusseren Dichtring 32 auf, der die Lunchbox dicht nach aussen verschliesst, indem er umlaufend dichtend auf dem oberen Rand 33 des Bodens 3 aufliegt.

In **Figur 27** ist der Behälter 4 mit dem Behälterdeckel 7 verschlossen. Somit gibt es keine Gas-Verbindung in den Innenraum 10. Die Lunchbox ist bereit zum Erwärmen.

In **Figur 28** ist der Behälterdeckel 7 entfernt und somit der Behälter 4 offen. Die Gas-Verbindung ist offen und die Lunchbox ist bereit zum Steamen.

Der Behälterdeckel 7 ist je nach Ausführungsform wiederverwendbar ausgebildet oder er wird als Einwegteil eingesetzt. Der Behälterdeckel 7 bildet die Schaltvorrichtung, insbesondere wenn er wiederverwendbar ausgebildet ist.

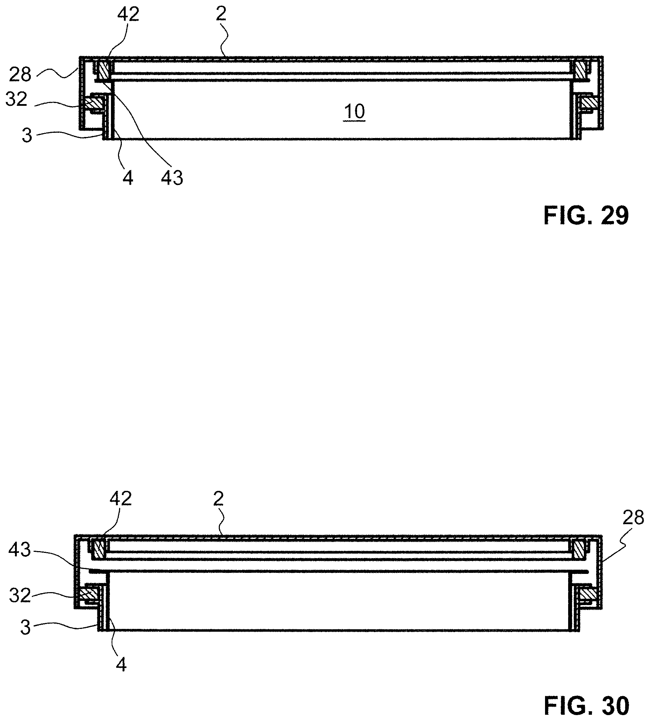

In den **Figuren 29 und 30** ist eine weitere Ausführungsform dargestellt. Der Deckel 2 weist einen umlaufenden, nach unten gerichteten Mantel 28 auf. Der äussere Dichtring 32 ist nicht am Deckel 2 angeordnet, sondern er ist ein einer entsprechenden Aufnahme an den Seitenwänden des Behälters 3 gehalten oder angeformt. Der Mantel 28 überdeckt den äusseren Dichtring 32, so dass die Lunchbox nach aussen dicht verschlossen ist. Der innere Dichtring 42 ist nach wie vor am Deckel 2 angeordnet und ragt nach unten. Im geschlossenen Zustand liegt der innere Dichtring 42 auf dem oberen Rand 43 des Behälters 4 dichtend an. Die Gas-Verbindung ist unterbrochen und mittels der Lunchbox kann nur erwärmt werden. dies ist in Figur 29 erkennbar.

Wird der Deckel 2 angehoben, so gibt der innere Dichtring 32 den oberen Rand 43 des Behälters 4 frei und die Gas-Verbindung ist offen. Die Lunchbox kann zum Steamen verwendet werden. Dies ist in **Figur 30** erkennbar. Die Lunchbox ist nach aussen immer noch vollständig dicht, da der Mantel 28 des Deckels 2 entlang dem äusseren Dichtring 43 verschoben wurde, aber nach wie vor an ihm anliegt.

Die Verschiebung des Deckels 2 kann auf unterschiedliche Weise erfolgen. Beispielsweise kann dies von Hand erfolgen. Die Verschiebung nach oben lässt sich jedoch auch mittels des in der Vorrichtung erzeugten Dampfes erzielen. In beiden Fällen ist vorzugsweise eine Verriegelung vorhanden, um ein Anheben des Deckels 2 zu vermeiden, wenn lediglich die Erwärmfunktion verwendet werden soll. Als Verriegelung lassen sich die üblichen klemmenden Mittel oder andere bekannte Elemente verwenden. Die Schaltvorrichtung ist auch hier der Deckel 2 selber.

Die erfindungsgemässe Lunchbox lässt sich einfach, robust und kostengünstig ausbilden und sie ermöglicht auf einfache Art und Weise eine vielfältige Art der Zubereitung von Speisen.

### BEZUGSZEICHENLISTE

| | | | |
|---|---|---|---|
| 1 | Lunchbox | 45 | Dichtflügel |
| 2 | Deckel | 46 | Leerraum |
| 3 | Boden | 50 | Schaltvorrichtung |
| 4 | Behälter | 51 | Hülse |
| 5 | Befestigungselement | 52 | Stift |
| 6 | Schalthebel | 53 | Aufnahme |
| 7 | Behälterdeckel | 60 | Nahrungsmitteleinheit |
| 10 | Nahrungsmittel-Kavität | 65 | Nahrungsmitteleinheit-Deckel |
| 20 | Heiz-Kavität | | |
| 21 | Wasser-Kavität | 66 | Griff |
| 22 | Stege | 67 | Kopf |
| 25 | Unterseite des Deckels | 68 | Schaft |
| 26 | äussere Deckelplatte | 63 | Kulisse |
| 27 | innere Deckelplatte | 70 | Elektronik-Kavität |
| 28 | Mantel | 71 | Behälter-Dichtring |
| 29 | Verschiebeknopf | 80 | Heizelement |
| 30 | zweite Dichtung | 82 | Stromanschluss |
| 31 | zweite Strukturen | 84 | Signalausgabeeinheit |
| 32 | zweiter Dichtring | 85 | Steuerungsvorrichtung |
| 33 | oberer Rand des Bodens | 86 | User Interface |
| 40 | erste Dichtung | 89 | Platine |
| 41 | erste Strukturen | 90 | Drucksensor |
| 42 | erster Dichtring | 95 | erster Temperatursensor |
| 43 | oberer Rand des Behälters | 96 | zweiter Temperatursensor |

## Patentansprüche

1. Portable Lunchbox (1) zum Aufbewahren, Transportieren und Zubereiten von Nahrungsmitteln, aufweisend
- eine Nahrungsmittel-Kavität (10) zur Aufnahme von Nahrungsmitteln;
- eine Heiz-Kavität (20) zur Aufnahme von Wasser;
- ein Heizelement (80) zur Erwärmung von Wasser in der Heiz-Kavität (20);
- eine Schaltvorrichtung (50), welche von einem ersten Zustand in einen zweiten Zustand geschaltet werden kann;
wobei die Lunchbox (1) dazu eingerichtet ist
- in dem ersten Zustand der Schaltvorrichtung (50) in der Nahrungsmittel-Kavität (10) angeordnete Nahrungsmittel zu erwärmen, und
- in dem zweiten Zustand der Schaltvorrichtung (50) in der Nahrungsmittel-Kavität (10) angeordnete Nahrungsmittel zu steamen,
**dadurch gekennzeichnet, dass** die Schaltvorrichtung
- im ersten Zustand eine Gas-Verbindung zwischen der Heiz-Kavität (20) und der Nahrungsmittel-Kavität (10) verschliesst und
- im zweiten Zustand eine Gas-Verbindung zwischen der Heiz-Kavität (20) und der Nahrungsmittel-Kavität (10) öffnet.

2. Portable Lunchbox (1) nach Anspruch 1, aufweisend eine erste Dichtung (40), wobei
- im ersten Zustand der Schaltvorrichtung (50) die erste Dichtung (40) die Nahrungsmittel-Kavität (10) gasdicht gegen die Heiz-Kavität (20) abdichtet, und
- im zweiten Zustand der Schaltvorrichtung (50) die Schaltvorrichtung (50) die erste Dichtung (40) zumindest teilweise aufhebt, so dass die Nahrungsmittel-Kavität (10) und die Heiz-Kavität (20) miteinander gasverbunden sind.

3. Portable Lunchbox (1) nach Anspruch 2, aufweisend
- eine zweite Dichtung (30), welche in einem geschlossenen Zustand der Lunchbox (1) die Nahrungsmittel-Kavität (10) nach aussen hin gasdicht abdichtet; und
wobei die erste Dichtung (40) und die zweite Dichtung (30) als ein einziges Bauteil ausgebildet sind.

4. Portable Lunchbox (1) nach den Ansprüchen 2 und 3, wobei die erste Dichtung (40) einen ersten in sich geschlossenen Dichtring (42) aufweist und die zweite Dichtung (30) einen zweiten in sich geschlossenen Dichtring (32) aufweist, wobei der erste Dichtring (42) innerhalb einer vom zweiten Dichtring (32) umschlossenen Fläche verläuft.

5. Portable Lunchbox nach Anspruch 4, wobei der erste Dichtring (42) in mindestens einem Bereich einen um ein Vielfaches grösseren Abstand zu einem benachbarten Bereich des zweiten Dichtrings (32) aufweist als diesem Bereich angrenzende Bereiche der zwei Dichtringe (32, 42).

6. Portable Lunchbox nach Anspruch 5, wobei im Bereich mit vergrössertem Abstand ein Dichtungsflügel (45) die zwei Dichtringe (32, 42) miteinander verbindet, wobei der Dichtungsflügel mittels eines Verbindungselements (51) mit der Schaltvorrichtung (50) fest verbunden ist und wobei im zweiten Zustand der Schaltvorrichtung (50) der Dichtungsflügel und ein zugehöriger Bereich des ersten Dichtrings (42) angehoben sind.

7. Portable Lunchbox nach Anspruch 6, wobei im ersten Zustand der Schaltvorrichtung der erste Dichtring (42) über seine gesamte Länge auf einem umlaufenden oberen Rand (43) der Nahrungsmittel-Kavität (10) aufliegt.

8. Portable Lunchbox nach einem der Ansprüche 1 bis 7, wobei ein Deckel (2) vorhanden ist, der einen die Nahrungsmittel-Kavität (10) und die Heiz-Kavität (20) umgebenden Boden (3) dichtend verschliesst, wobei der Deckel (2) in zwei unterschiedlichen Positionen auf den Boden (3) aufsetzbar ist, wobei der Deckel (2) die Schaltvorrichtung bildet und wobei eine erste Position des Deckels (2) auf dem Boden (3) den ersten Zustand und eine zweite Position des Deckels (2) auf dem Boden (3) den zweiten Zustand erstellt.

9. Portable Lunchbox nach einem der Ansprüche 1 bis 7, wobei ein Deckel (2) vorhanden ist, der einen die Nahrungsmittel-Kavität (10) und die Heiz-Kavität (20) umgebenden Boden (3) dichtend verschliesst, wobei die Schaltvorrichtung die Position des Deckels (2) relativ zum Boden (3) verändert, um die zwei Zustände zu erstellen.

10. Portable Lunchbox nach Anspruch 9, wobei Schaltvorrichtung manuell betätigbar ist.

11. Portable Lunchbox nach Anspruch 9, wobei Schaltvorrichtung mittels eines während eines Aufheizens des Wassers in der Lunchbox entstehenden Überdrucks betätigbar ist.

12. Portable Lunchbox nach Anspruch 11, wobei mindestens ein Fixierungsmittel vorhanden ist, um den Deckel (2) in einer Position relativ zum Boden (3) zu fixieren.

13. Portable Lunchbox nach einem der Ansprüche 1 bis 12, wobei sie eine sich während eines Aufheizens des Wassers nach aussen bewegende Wandung aufweist, die bei nach ausser dichter Lunchbox eine Volumenvergrösserung in einem Innenraum der Lunchbox ermöglicht.

14. Portable Lunchbox (1) nach einem der vorstehenden Ansprüche, **dadurch gekennzeichnet, dass** im geschlossenen Zustand der Lunchbox (1)
- die Nahrungsmittel-Kavität (10);
- die Heiz-Kavität (20); und
- im zweiten Zustand der Schaltvorrichtung (50) die Vereinigung aus Nahrungsmittel-Kavität (10) und Heiz-Kavität (20)
nach aussen gas- und flüssigkeitsdicht ausgebildet ist.

15. Portable Lunchbox (1) nach einem der vorstehenden Ansprüche, aufweisend
- einen Deckel (2);
- einen Boden (3); und
- einen zur Aufnahme von Nahrungsmitteln ausgebildeten Behälter (4), wobei im geschlossenen Zustand der Lunchbox (1)
- der Behälter (4) zwischen Deckel (2) und Boden (3) angeordnet ist.

16. Portable Lunchbox (1) nach Anspruch 15, aufweisend ein Befestigungselement (5), welches dazu geeignet ist, den Deckel (2) an dem Boden (3) zu befestigen und wobei das Befestigungselement (5) als Schaltvorrichtung (50) ausgebildet ist.

17. Portable Lunchbox (1) nach einem der vorstehenden Ansprüche, aufweisend
- einen Drucksensor (90), welcher dazu eingerichtet ist, einen die Lunchbox (1) umgebenden Druck zu erfassen;
- einen ersten Temperatursensor (95), welcher dazu eingerichtet, ist eine Temperatur innerhalb der Heiz-Kavität (20) zu erfassen; und
- eine Steuerungsvorrichtung (85), welche dazu eingerichtet ist eine Heizleistung des Heizelementes (80) in Abhängigkeit der von dem Drucksensor (90) und dem ersten Temperatursensor (95) erfassten Daten zu steuern.

18. Portable Lunchbox (1) nach einem der vorstehenden Ansprüche, aufweisend
- die Heiz-Kavität (20) mit einer Wasser-Kavität (21) zur Aufnahme von Wasser;
- das Heizelement (80) zur Erwärmung von Wasser in der Wasser-Kavität (21);
- einen ersten Temperatursensor (95), welcher dazu eingerichtet ist, eine Temperatur innerhalb der Heiz-Kavität (20), jedoch ausserhalb der Wasser-Kavität (21) zu erfassen;
- einen zweiten Temperatursensor (96), welcher dazu eingerichtet ist, eine Temperatur innerhalb der Wasser-Kavität (21) zu erfassen; und
- eine Steuerungsvorrichtung (85), welche dazu eingerichtet ist eine Heizleistung des Heizelementes (80) in Abhängigkeit der vom ersten und zweiten Temperatursensor (95, 96) erfassten Daten zu steuern.

## Claims

1. Portable lunchbox (1) for storing, transporting, and preparing food, comprising
- a food cavity (10) for receiving food;
- a heating cavity (20) for receiving water;
- a heating element (80) for heating water in the heating cavity (20);
- a switch device (50) which can be switched from a first state to a second state; wherein the lunchbox (1) is designed
- in the first state of the switch device (50) to heat food arranged in the food cavity (10), and
- in the second state of the switch device (50) to steam food arranged in the food cavity (10),
**characterized in that** the switch device
- in the first state, closes a gas connection between the heating cavity (20) and the food cavity (10), and
- in the second state, opens a gas connection between the heating cavity (20) and the food cavity (10).

2. Portable lunchbox (1) according to claim 1, comprising a first seal (40), wherein
- in the first state of the switch device (50), the first seal (40) seals the food cavity (10) in a gas-tight manner with respect to the heating cavity (20), and
- in the second state of the switch device (50), the switch device (50) at least partially releases the first seal (40) so that the food cavity (10) and the heating cavity (20) are gas-connected to each other.

3. Portable lunchbox (1) according to claim 2, comprising
- a second seal (30) which, in a closed state of the lunchbox (1), seals the food cavity (10) with respect to the outside in a gas-tight manner; and
wherein the first seal (40) and the second seal (30) are formed as a single component.

4. Portable lunchbox (1) according to claims 2 and 3, wherein the first seal (40) comprises a first self-contained sealing ring (42) and the second seal (30) comprises a second self-contained sealing ring (32), wherein the first sealing ring (42) extends within an area enclosed by the second sealing ring (32).

5. Portable lunchbox according to claim 4, wherein the first sealing ring (42) has, in at least one region, a distance from an adjacent region of the second sealing ring (32) which is many times greater than regions of the two sealing rings (32, 42) adjacent to this region.

6. Portable lunchbox according to claim 5, wherein in the region with increased spacing a sealing wing (45) connects the two sealing rings (32, 42) to one another, wherein the sealing wing is firmly connected to the switch device (50) by means of a connecting element (51), and wherein in the second state of the switch device (50) the sealing wing and an associated region of the first sealing ring (42) are raised.

7. Portable lunchbox according to claim 6, wherein in the first state of the switch device the first sealing ring (42) rests over its entire length on a circumferential upper edge (43) of the food cavity (10).

8. Portable lunchbox according to one of claims 1 to 7, wherein a lid (2) is provided which sealingly closes a base (3) surrounding the food cavity (10) and the heating cavity (20), wherein the lid (2) can be placed on the base (3) in two different positions, wherein the lid (2) forms the switch device, and wherein a first position of the lid (2) on the base (3) creates the first state and a second position of the lid (2) on the base (3) creates the second state.

9. Portable lunchbox according to one of claims 1 to 7, wherein a lid (2) is provided, which sealingly closes a base (3) surrounding the food cavity (10) and the heating cavity (20), wherein the switch device changes the position of the lid (2) relative to the base (3) to create the two states.

10. Portable lunchbox according to claim 9, wherein the switch device is manually operable.

11. Portable lunchbox according to claim 9, wherein the switch device is operable by means of a positive pressure created during heating of the water in the lunchbox.

12. Portable lunchbox according to claim 11, wherein at least one fixing means is provided to fix the lid (2) in a position relative to the base (3).

13. Portable lunchbox according to one of claims 1 to 12, wherein it has a wall which moves outwardly during heating of the water and which allows an increase in volume in an interior of the lunchbox when the lunchbox is outwardly sealed.

14. Portable lunchbox (1) according to one of the preceding claims, **characterised in that**, in the closed state of the lunchbox (1),
- the food cavity (10);
- the heating cavity (20); and
- in the second state of the switch device (50), the combination of food cavity (10) and heating cavity (20)
is gas- and liquid-tight to the outside.

15. Portable lunchbox (1) according to one of the preceding claims, comprising
- a lid (2);
- a base (3); and
- a container (4) designed to receive food,
wherein in the closed state of the lunchbox (1)
- the container (4) is arranged between the lid (2) and the base (3).

16. Portable lunchbox (1) according to claim 15, comprising a fastening element (5) which is designed to fasten the lid (2) to the base (3) and wherein the fastening element (5) is designed as a switch device (50).

17. Portable lunchbox (1) according to one of the preceding claims, comprising
- a pressure sensor (90) designed to detect a pressure surrounding the lunchbox (1);
- a first temperature sensor (95) designed to sense a temperature within the heating cavity (20); and
- a control device (85) designed to control a heating power of the heating element (80) in dependence on the data detected by the pressure sensor (90) and the first temperature sensor (95).

18. Portable lunchbox (1) according to one of the preceding claims, comprising
- the heating cavity (20) with a water cavity (21) for receiving water;
- the heating element (80) for heating water in the water cavity (21);
- a first temperature sensor (95) designed to detect a temperature inside the heating cavity (20) but outside the water cavity (21);
- a second temperature sensor (96) designed to detect a temperature within the water cavity (21); and
- a control device (85) designed to control a heating power of the heating element (80) in dependence on the data detected by the first and second temperature sensors (95, 96).

## Revendications

1. Boîte à repas portable (1) servant à conserver, transporter et préparer des aliments, présentant
- une cavité à aliments (10) servant à recevoir des aliments ;
- une cavité de chauffage (20) servant à recevoir de l'eau ;
- un élément chauffant (80) servant à chauffer de l'eau dans la cavité de chauffage (20) ;
- un dispositif de commutation (50), lequel peut être commuté d'un premier état à un deuxième état ;
la boîte à repas (1) étant conçue
- pour chauffer des aliments disposés dans la cavité à aliments (10) dans le premier état du dispositif de commutation (50) et
- pour cuire à la vapeur des aliments disposés dans la cavité à aliments (10) dans le deuxième état du dispositif de commutation (50),
**caractérisée en ce que** le dispositif de commutation
- ferme une communication de gaz entre la cavité de chauffage (20) et la cavité à aliments (10) dans le premier état et
- ouvre une communication de gaz entre la cavité de chauffage (20) et la cavité à aliments (10) dans le deuxième état.

2. Boîte à repas portable (1) selon la revendication 1, présentant un premier joint d'étanchéité (40),
- le premier joint d'étanchéité (40) rendant la cavité à aliments (10) étanche aux gaz par rapport à la cavité de chauffage (20) dans le premier état du dispositif de commutation (50) et
- le dispositif de commutation (50) soulevant le premier joint d'étanchéité (40) au moins partiellement dans le deuxième état du dispositif de commutation (50), de telle sorte que la cavité à aliments (10) et la cavité de chauffage (20) soient en communication de gaz l'une avec l'autre.

3. Boîte à repas portable (1) selon la revendication 2, présentant
- un deuxième joint d'étanchéité (30), lequel, dans un état fermé de la boîte à repas (1), rend la cavité à aliments (10) étanche aux gaz vers l'extérieur ; et
le premier joint d'étanchéité (40) et le deuxième joint d'étanchéité (30) étant réalisés sous la forme d'un composant unique.

4. Boîte à repas portable (1) selon les revendications 2 et 3, le premier joint d'étanchéité (40) présentant une première bague d'étanchéité (42) fermée sur elle-même et le deuxième joint d'étanchéité (30) présentant une deuxième bague d'étanchéité (32) fermée sur elle-même, la première bague d'étanchéité (42) s'étendant à l'intérieur d'une surface entourée par la deuxième bague d'étanchéité (32).

5. Boîte à repas portable selon la revendication 4, la première bague d'étanchéité (42) présentant, dans au moins une région, une distance à une région contiguë de la deuxième bague d'étanchéité (32) qui est plusieurs fois supérieure à la distance aux régions, adjacentes à cette région, des deux bagues d'étanchéité (32, 42).

6. Boîte à repas portable selon la revendication 5, une ailette d'étanchéité (45) reliant les deux bagues d'étanchéité (32, 42) l'une à l'autre dans la région de plus grande distance, l'ailette d'étanchéité étant reliée fixement au dispositif de commutation (50) au moyen d'un élément de liaison (51) et, dans le deuxième état du dispositif de commutation (50), l'ailette d'étanchéité et une région associée de la première bague d'étanchéité (42) étant soulevées.

7. Boîte à repas portable selon la revendication 6, la première bague d'étanchéité (42) reposant sur toute sa longueur sur un bord supérieur périphérique (43) de la cavité à aliments (10) dans le premier état du dispositif de commutation.

8. Boîte à repas portable selon l'une des revendications 1 à 7, un couvercle (2) étant prévu, lequel ferme de manière étanche une base (3) entourant la cavité à aliments (10) et la cavité de chauffage (20), le couvercle (2) pouvant être placé sur la base (3) dans deux positions différentes, le couvercle (2) formant le dispositif de commutation et une première position du couvercle (2) sur la base (3) créant le premier état et une deuxième position du couvercle (2) sur la base (3) créant le deuxième état.

9. Boîte à repas portable selon l'une des revendications 1 à 7, un couvercle (2) étant prévu, lequel ferme de manière étanche une base (3) entourant la cavité à aliments (10) et la cavité de chauffage (20), le dispositif de commutation modifiant la position du couvercle (2) par rapport à la base (3), afin de créer les deux états.

10. Boîte à repas portable selon la revendication 9, le dispositif de commutation pouvant être actionné manuellement.

11. Boîte à repas portable selon la revendication 9, le dispositif de commutation pouvant être actionné au moyen d'une surpression produite pendant un chauffage de l'eau dans la boîte à repas.

12. Boîte à repas portable selon la revendication 11, au moins un moyen de fixation étant prévu, afin de fixer le couvercle (2) dans une position par rapport à la base (3).

13. Boîte à repas portable selon l'une des revendications 1 à 12, celle-ci présentant une paroi se déplaçant vers l'extérieur pendant un chauffage de l'eau, laquelle paroi permet une augmentation de volume dans un espace intérieur de la boîte à repas lorsque la boîte à repas est étanche par rapport à l'extérieur.

14. Boîte à repas portable (1) selon l'une des revendications précédentes, **caractérisée en ce que** dans l'état fermé de la boîte à repas (1)
- la cavité à aliments (10) ;
- la cavité de chauffage (20) ; et
- dans le deuxième état du dispositif de commutation (50) l'association de la cavité à aliments (10) et de la cavité de chauffage (20)
sont réalisées de manière étanche aux gaz et aux liquides par rapport à l'extérieur.

15. Boîte à repas portable (1) selon l'une des revendications précédentes, présentant
- un couvercle (2) ;
- une base (3) ; et
- un contenant (4) réalisé pour recevoir des aliments,
et dans l'état fermé de la boîte à repas (1),
- le contenant (4) étant disposé entre le couvercle (2) et la base (3).

16. Boîte à repas portable (1) selon la revendication 15, présentant un élément de fixation (5), lequel est approprié pour fixer le couvercle (2) sur la base (3) et l'élément de fixation (5) étant réalisé sous forme de dispositif de commutation (50).

17. Boîte à repas portable (1) selon l'une des revendications précédentes, présentant
- un capteur de pression (90), lequel est conçu pour détecter une pression entourant la boîte à repas (1) ;
- un premier capteur de température (95), lequel est conçu pour détecter une température à l'intérieur de la cavité de chauffage (20) ; et
- un dispositif de commande (85), lequel est conçu pour commander une puissance de chauffage de l'élément chauffant (80) en fonction des données détectées par le capteur de pression (90) et le premier capteur de température (95).

18. Boîte à repas portable (1) selon l'une des revendications précédentes, présentant
- la cavité de chauffage (20) comportant une cavité à eau (21) servant à recevoir de l'eau ;
- l'élément chauffant (80) servant à chauffer de l'eau dans la cavité à eau (21);
- un premier capteur de température (95), lequel est conçu pour détecter une température à l'intérieur de la cavité de chauffage (20), mais à l'extérieur de la cavité à eau (21) ;
- un deuxième capteur de température (96), lequel est conçu pour détecter une température à l'intérieur de la cavité à eau (21) ; et
- un dispositif de commande (85), lequel est conçu pour commander une puissance de chauffage de l'élément chauffant (80) en fonction des données détectées par le premier et le deuxième capteur de température (95, 96).
